# EUROPEAN PATENT APPLICATION

(11) **EP 4 576 389 A1**
(43) Date of publication of application: **25.06.2025**
(21) Application number: 23915266.3
(22) Date of filing: 09.01.2023
(51) Int. Cl.: H01M 50/431, H01M 50/457, H01M 50/449, H01M 10/052

(54) **DIAPHRAGM, SLURRY FOR COATING LAYER, PREPARATION METHOD FOR EACH, ELECTRODE ASSEMBLY, BATTERY, AND ELECTRICAL DEVICE**

(71) Applicant: Contemporary Amperex Technology (Hong Kong) Limited, Central (HK)
(72) Inventor: LIU, Feng, Ningde, Fujian 352100 (CN); FAN, Yulei, Ningde, Fujian 352100 (CN); GUAN, Wenhao, Ningde, Fujian 352100 (CN); LING, Yuexia, Ningde, Fujian 352100 (CN); ZHONG, Wei, Ningde, Fujian 352100 (CN); GE, Xiaoming, Ningde, Fujian 352100 (CN); OUYANG, Chuying, Ningde, Fujian 352100 (CN)
(74) Representative: Ziebig Hengelhaupt Intellectual Property Attorneys Patentanwaltskanzlei PartGmbB
(86) International application number: PCT/CN2023/071451
(87) International publication number: WO 2024/148487

(57) **Abstract**

This application relates to the technical field of separators, and in particular, to a separator and a preparation method thereof, a coating slurry and a preparation method thereof, an electrode assembly, a battery, and an electrical device. The separator includes a first isolation layer, a coating, and a second isolation layer. The coating is disposed on at least one surface of the first isolation layer. The coating includes a solid electrolyte material. The second isolation layer is disposed on a surface of the coating, the surface being away from the first isolation layer. The solid electrolyte material can react with metallic lithium to absorb lithium dendrites to prevent the lithium dendrites from penetrating the separator. The first isolation layer and the second isolation layer disposed on two sides of the coating respectively can prevent the lithium dendrites from penetrating the separator, and the coating being disposed between the first isolation layer and the second isolation layer can prevent the coating from contacting a positive electrode or negative electrode to cause side reactions.

## Description

### TECHNICAL FIELD

This application relates to the technical field of separators, and in particular, to a separator and a preparation method thereof, a coating slurry and a preparation method thereof, an electrode assembly, a battery, and an electrical device.

### BACKGROUND

Lithium batteries are characterized by a higher energy density and higher ability to operate at high voltages than other secondary batteries. Therefore, as a type of secondary batteries that can be easily made to be small-sized and lightweight, the lithium batteries have been applied to information devices such as mobile phones. In recent years, the demand for large-scale power secondary batteries for use in electric vehicles, hybrid electric vehicles, and the like has also surged.

In a lithium battery in the related art, to a degree depending on the composition of the battery, the way in which the battery is used, and the like, dendrites of metallic lithium sometimes grow from a negative active material layer to a positive active material layer during charge-discharge cycling, thereby causing an internal short circuit.

### SUMMARY

A main objective of this application is to provide a separator, so as to avoid growth of dendrites of metallic lithium through the separator and improve safety of a battery in use.

To achieve the above objective, this application discloses a separator. The separator includes:
a first isolation layer and a coating disposed on at least one surface of the first isolation layer, where the coating includes a solid electrolyte material; and
a second isolation layer, where the second isolation layer is disposed on a surface of the coating, the surface being away from the first isolation layer.

Optionally, the first isolation layer and/or the second isolation layer includes a base film.

Compared with an inorganic material structure, the base film is lighter in weight, thereby reducing the weight of the separator and avoiding a decrease of the gravimetric energy density of a battery containing the separator. Understandably, in an embodiment, the first isolation layer includes a base film, but the second isolation layer includes no base film. In another embodiment, the first isolation layer includes no base film, but the second isolation layer includes a base film. In another embodiment, the first isolation layer and the second isolation layer each include a base film.

Optionally, the first isolation layer and/or the second isolation layer further includes an inorganic coating.

The inorganic coating exhibits hardness to a degree, and can prevent lithium dendrites from penetrating the separator to some extent. The inorganic coating can provide overall mechanical strength of the separator, improve the insulativity of the separator, and improve the wettability of the separator to an electrolyte solution. The first isolation layer and/or the second isolation layer further includes an inorganic coating. Understandably, the first isolation layer includes an inorganic coating, and the second isolation layer includes no inorganic coating; or, the first isolation layer includes no inorganic coating, and the second isolation layer includes an inorganic coating; or, the first isolation layer and the second isolation layer each include an inorganic coating.

Optionally, the first isolation layer includes a base film and an inorganic coating. The inorganic coating is disposed on at least one surface of the base film; and/or the second isolation layer includes a base film and an inorganic coating, and the inorganic coating is disposed on at least one surface of the base film.

The base film is an organic microporous film. Compared with the inorganic coating, the organic microporous film is lighter in weight, thereby reducing the weight of the separator, and avoiding a decrease of the gravimetric energy density of the battery containing the separator. The isolation layer containing the base film and the inorganic coating can reduce the thickness of the inorganic coating and increase the gravimetric energy density of the battery.

Optionally, the coating exhibits lithium-ion conductivity. Optionally, at 25 °C, an ion conductivity of the coating ranges from 0.5 S/cm to 5 S/cm.

The solid electrolyte material exhibits lithium-ion conductivity, that is, is capable of conducting ions. For example, the material may be a solid electrolyte capable of reacting with lithium metal and conducting lithium ions. For example, the solid electrolyte material is a solid electrolyte containing Li, P, S, and M, where M is Ge, Si, Sn, or a combination thereof. The solid electrolyte material is Li_{3.25}Ge_{0.25}P_{0.75}S₄, Li₁₀GeP₂S₁₂, Li₁₀SnP₂S₁₂, Li₁₁Si₂PS₁₂, or Li₄GeS₄-Li₃PS₄ glass ceramics, or a Li-Si-PS-Cl solid electrolyte of an LGPS structure, or a combination thereof.

At 25 °C, the ionic conductivity of the coating ranges from 0.5 S/cm to 5 S/cm. To the extent of the above range, the ionic conductivity of the coating may be a maximum value, a minimum value, or any value between the maximum value and the minimum value within the above range. For example, the ionic conductivity may be, but is not limited to, 0.5 S/cm, 0.8 S/cm, 1 S/cm, 1.5 S/cm, 1.8 S/cm, 2 S/cm, 2.5 S/cm, 2.8 S/cm, 3 S/cm, 3.5 S/cm, 3.8 S/cm, 4 S/cm, 4.5 S/cm, 4.8 S/cm, 5 S/cm, or the like.

Optionally, the solid electrolyte material includes at least one of lithium aluminum titanium phosphate, lithium titanium phosphate, lithium tetrathiophosphate, lithium germanium phosphorus sulfide, or lithium phosphorus sulfur chloride.

With the solid electrolyte material being at least one of lithium aluminum titanium phosphate, lithium titanium phosphate, lithium tetrathiophosphate, lithium germanium phosphorus sulfide, or lithium phosphorus sulfur chloride, such substances are solid electrolyte materials and exhibit some ionic conductivity and a relatively low electronic conductivity. When used as an electrolyte material, such substances exhibit relatively high ion conductivity and electronic insulativity. Therefore, when used as a separator coating, such substances can avoid a significant increase of the separator impedance and suppress electrons from being transferred through the separator. In addition, such substances are gradually lithiated after contacting lithium. The lithiation process is accompanied by a change in the valence state of the transition metal element. Therefore, when used as an intermediate coating of the separator, such substances can react with lithium dendrites that are prone to pierce the separator, thereby preventing the lithium dendrites from continuing to grow.

Optionally, a particle diameter Dᵥ₅₀ of the solid electrolyte material is 50 nm to 5 µm.

When the particle diameter of the solid electrolyte material powder is excessively large, the viscosity of the slurry is relatively high during the slurry preparation, and the homogeneity of the slurry is not easily ensured, thereby making it difficult to apply the slurry onto the isolation layer. In addition, the "powder shedding" phenomenon is prone to occur during the coating. The powder is hardly attachable to the surface of the isolation layer, thereby making the coating effect unsatisfactory and undesirable. If the particle diameter is excessively small, the particles are prone to block the pores on the surface of the isolation layer during coating, thereby reducing the air permeability of the isolation layer, and blocking the ion transfer channel, and evidently impairing the capacity and cycle life of the battery. For this reason, the particle diameter Dᵥ₅₀ of the solid electrolyte material is 50 nm to 5 µm, for example, may be 50 nm, 100 nm, 500 nm, 800 nm, 1 µm, 2 µm, 3 µm, 4 µm, 5 µm, or the like, that is, any value within the range of 50 nm to 5 µm, without being particularly limited herein.

Optionally, the particle diameter Dᵥ₅₀ of the solid electrolyte material is 50 nm to 500 nm.

When the particle diameter Dᵥ₅₀ of the solid electrolyte material falls within the range of 50 nm to 500 nm, the preparation effect and coating effect of the slurry are superior. For example, the particle diameter Dᵥ₅₀ of the solid electrolyte material may be 50 nm, 100 nm, 200 nm, 300 nm, 400 nm, 500 nm, or the like, that is, any value within the range of 50 nm to 500 nm, without being particularly limited herein.

Optionally, the thickness of the coating is 0.5 µm to 5 µm.

When the thickness of the coating is excessively large, the internal resistance of the separator increases, and it is more difficult for lithium ions to pass through the separator, thereby resulting in a decline in the battery performance. When the thickness of the coating is excessively small, the coating absorbs elemental lithium in an excessively small amount. When lithium dendrites grow in large quantities, the dendrites are prone to penetrate the separator. For this reason, the thickness of the coating is 0.5 µm to 5 µm, for example, may be 0.5 µm, 1 µm, 2 µm, 3 µm, 4 µm, 5 µm, or the like, that is, any value within the range of 0.5 µm to 5 µm, without being particularly limited herein.

Optionally, the thickness of the inorganic coating is 1 µm to 5 µm.

The thickness of the inorganic coating needs to avoid being excessively thick and excessively thin. If the inorganic coating is excessively thin, the supporting strength of the separator is insufficient, and the electrolyte solution produces a weak infiltration effect. If the inorganic coating is excessively thick, the energy density decreases. For this reason, the thickness of the inorganic coating is 1 µm to 5 µm, for example, may be 1 µm, 2 µm, 3 µm, 4 µm, 5 µm, or the like, that is, any value within the range of 1 µm to 5 µm, without being particularly limited herein.

Optionally, the thickness of the inorganic coating is 1.5 µm to 3.5 µm.

When the thickness of the inorganic coating falls within the range of 1.5 µm to 3.5 µm, the mechanical properties and wettability of the separator are superior. For example, the thickness of the inorganic coating is 1.5 µm, 2 µm, 2.5 µm, 3 µm, 3.5 µm, or the like, that is, any value within the range of 1.5 µm to 3.5 µm, without being particularly limited herein.

Optionally, the particle diameter Dᵥ₅₀ of the inorganic material contained in the inorganic coating is 0.01 µm to 10 µm.

The inorganic coating is made of the inorganic material. The particle diameter of the inorganic material affects the porosity and strength of the inorganic coating. When the particle diameter Dᵥ₅₀ of the inorganic material contained in the inorganic coating is 0.01 µm to 10 µm, the mechanical properties and wettability of the inorganic coating are superior. For example, the particle diameter Dᵥ₅₀ of the inorganic material contained in a ceramic layer is 0.01 µm, 0.05 µm, 0.1 µm, 1 µm, 2 µm, 3 µm, 4 µm, 5 µm, 6 µm, 7 µm, 8 µm, 9 µm, 10 µm, or the like, that is, any value within the range of 0.01 µm to 10 µm, without being particularly limited herein.

Optionally, the particle diameter Dᵥ₅₀ of the inorganic material contained in the inorganic coating is 0.05 µm to 0.5 µm.

When the particle diameter Dᵥ₅₀ of the inorganic material contained in the inorganic coating is 0.05 µm to 0.5 µm, the performance of the inorganic coating is higher. For example, the particle diameter Dᵥ₅₀ of the inorganic material contained in the inorganic coating is 0.05 µm, 0.1 µm, 0.2 µm, 0.3 µm, 0.4 µm, 0.5 µm, or the like, that is, any value within the range of 0.05 µm to 0.5 µm, without being particularly limited herein.

Optionally, an inorganic material contained in the inorganic coating includes at least one of Al oxide, Al nitride, Si oxide, Si nitride, Fe oxide, Fe nitride, Fe oxyacid salt, Sn oxide, Ti oxide, Ti nitride, Cu oxide, Cu nitride, Mn oxide, Ge oxide, Zr oxide, Zn oxide, or Ni oxide.

The inorganic powder used in the inorganic coating is an inorganic particle suitable for use as an inorganic coating of this application, and is not particularly limited herein, and may be inorganic particles currently applied in the field of separators, such as inorganic particles of superior properties such as high mechanical strength, high electrochemical stability, and high wettability by the electrolyte solution. For example, the inorganic material contained in the inorganic coating includes at least one of Al oxide, Al nitride, Si oxide, Si nitride, Fe oxide, Fe nitride, Fe oxyacid salt, Sn oxide, Ti oxide, Ti nitride, Cu oxide, Cu nitride, Mn oxide, Ge oxide, Zr oxide, Zn oxide, or Ni oxide.

Optionally, an inorganic material contained in the inorganic coating includes at least one of Al₂O₃, SiO₂, ZnO, Fe₂O₃, NiO, CuO, or TiO₂.

Cost-effective inorganic materials can save cost. For example, Al oxides include Al₂O₃, Si oxides include SiO₂, Zn oxides include ZnO, Fe oxides include Fe₂O₃, Ni oxides include NiO, Cu oxides include CuO, and Ti oxides include TiO₂; and the inorganic material includes at least one of Al₂O₃, SiO₂, ZnO, Fe₂O₃, NiO, CuO, or TiO₂.

Understandably the main constituents of the inorganic coating include nanoparticles of aluminum and silicon oxides. These nanoparticles make the separator resistant to high temperature, provide a hydrophilic surface, improve the wettability by the electrolyte solution, promote the migration of active particles by interacting with anions in the electrolyte solution, and act as a barrier to prevent lithium dendrites from piercing the separator and causing a short circuit of the battery.

Optionally, the thickness of the base film is 3 µm to 30 µm.

If the base film is excessively thin, the mechanical strength of the separator is excessively weak, and is adverse to coating the base film with the electrolyte slurry. If the base film is excessively thick, the internal resistance of the battery increases. For this reason, the thickness of the base film is 3 µm to 30 µm, for example, may be 3 µm, 5 µm, 7 µm, 9 µm, 10 µm, 13 µm, 15 µm, 17 µm, 20 µm, 21 µm, 22 µm, 23 µm, 24 µm, 25 µm, 26 µm, 27 µm, 28 µm, 29 µm, 30 µm, or the like, that is, any value within the range of 3 µm to 30 µm, without being particularly limited herein.

Optionally, the thickness of the base film is 5 µm to 25 µm.

When the thickness of the base film falls within the range of 5 µm to 25 µm, the performance of the separator is superior. For example, the thickness of the base film may be 5 µm, 6 µm, 8 µm, 11 µm, 12 µm, 14 µm, 16 µm, 18 µm, 19 µm, 20 µm, 23 µm, 25 µm, or the like, that is, any value within the range of 5 µm to 25 µm, without being particularly limited herein.

Optionally, the porosity of the base film is 40% to 80%.

When the porosity of the base film is excessively low, the ion conductivity will be reduced. When the porosity of the base film is excessively high, the mechanical properties of the separator deteriorates. For this reason, the porosity of the base film is 40% to 80%, for example, may be 40%, 45%, 50%, 55%, 60%, 65%, 70%, 75%, 80%, or the like, that is, any value within the range of 40% to 80%, without being particularly limited herein.

Optionally, the weight-average molecular weight of the base film is 100,000 to 1,000,000.

Polymers with different weight-average molecular weights serve different functions and uses. The weight-average molecular weight that is excessively high or excessively low does not meet the appropriate weight-average molecular weight range of the base film for use in a lithium-ion battery. The weight-average molecular weight of the base film for use in a lithium-ion battery is 100,000 to 1,000,000, for example, may be 100,000, 500,000, 800,000, 1,000,000, or the like, that is, any value within the range of 100,000-1,000,000, without being particularly limited herein.

Optionally, a polymer material of the base film includes at least one of polypropylene, polyethylene, polyamide, polyester, polytetrafluoroethylene, polyvinylidene fluoride, or polyvinyl chloride.

The base film may be one selected from polymer films such as polypropylene or polyethylene, and may be a non-woven fabric film that uses polyamide, polyester, polytetrafluoroethylene, polyvinylidene fluoride, polyvinyl chloride, or the like as a substrate.

This application further provides an electrode assembly. The electrode assembly includes a negative electrode plate, a positive electrode plate, and the separator disclosed above.

The electrode assembly prepared from the above separator can prevent lithium dendrites from keeping growing and penetrating the separator, thereby improving the safety of the electrode assembly.

Optionally, it is defined that the first isolation layer is oriented toward the negative electrode plate, the second isolation layer is oriented toward the positive electrode plate, the first isolation layer includes a base film and an inorganic coating, and the inorganic coating is disposed on one side of the base film, the side being oriented away from the negative electrode plate.

Considering that the inorganic material contains some active materials that react with lithium, in order to prevent the inorganic coating from directly contacting and parasitically reacts with the lithium on the negative electrode side, the inorganic coating is disposed on one side of the base film, the side being oriented toward the coating. In other words, the inorganic coating is located between the base film and the coating.

Optionally, the first isolation layer is oriented toward the negative electrode plate, the second isolation layer is oriented toward the positive electrode plate, the second isolation layer includes a base film and an inorganic coating, and the inorganic coating is disposed on one side of the base film, the side being oriented toward the positive electrode plate; and/or the first isolation layer is oriented toward the negative electrode plate, the second isolation layer is oriented toward the positive electrode plate, the second isolation layer includes a base film and an inorganic coating, and the inorganic coating is disposed on one side of the base film, the side being oriented away from the positive electrode plate.

In other words, the inorganic coating is disposed on one side of the base film, the side being away from the coating; and the base film is disposed on one side of the inorganic coating, the side being away from the coating; or, the inorganic coating is disposed on both sides of the base film, so as to further prevent the dendrites from piercing the separator, play a protective role, and improve the mechanical strength of the separator.

This application further provides a coating slurry. The coating slurry includes a binder, a solvent, and a solid electrolyte material.

In a process of preparing the coating slurry, additives are generally added for stronger adhesion. For example, the coating slurry includes a binder, a solvent, and a solid electrolyte material.

Optionally, a mass of the solid electrolyte material is 30% to 45% of a mass of the coating slurry; and/or the coating slurry further includes a dispersant and a thickener, and a mass ratio between the solid electrolyte material, the binder, the dispersant, and the thickener is 1: (0.15 to 0.45): (0.01 to 0.03): (0.15 to 0.35); and/or a mass of the solvent is 30% to 60% of the mass of the coating slurry.

When the mass percent of the solid electrolyte material is excessively low, the slurry is relatively thin and the processing cost increases. Conversely, when the mass percent of the solid electrolyte material is excessively high, the solid content is **relatively** high and makes it difficult to process the material. For this reason, the mass of the solid electrolyte material is 30% to 45%, for example, 30%, 33%, 35%, 38%, 40%, 42%, 43%, 44%, 45%, and so on, of the mass of the coating slurry, that is, any value within the range of 30% to 45%, without being particularly limited herein.

The coating slurry further includes a dispersant and a thickener. A mass ratio between the solid electrolyte material, the binder, the dispersant, and the thickener is 1: (0.15 to 0.45): (0.01 to 0.03): (0.15 to 0.35).

The mass ratio of the solid electrolyte material to the binder is 1: (0.15 to 0.45). A moderate amount of binder prevents the coating layer from falling off and makes the coating layer well resistant to heat. A deficient amount of binder leads to insufficient adhesion, and an excessive amount of binder leads to an excessive slurry viscosity. For this reason, the mass ratio of the solid electrolyte material to the binder is 1: (0.15 to 0.45), for example, may be 1: 0.15, 1: 0.2, 1: 0.25, 1: 0.3, 1: 0.35, 1: 0.4, 1: 0.45, or the like, that is, any value within the range of 1: (0.15 to 0.45), without being particularly limited herein.

An appropriate content of the dispersant makes the slurry dispersed evenly, and an excessively low content of the dispersant causes the slurry to agglomerate and be hardly dispersible. For this reason, the mass ratio of the solid electrolyte material to the dispersant is 1: (0.01 to 0.03), for example, may be 1: 0.01, 1: 0.015, 1: 0.02, 1: 0.025, 1: 0.03, or the like, that is, any value within the range of 1: (0.01 to 0.03), without being particularly limited herein.

An excessively low content of the thickener reduces the stability of the slurry, and an excessively high content of the thickener leads to a high viscosity and difficulty of processing. For this reason, the mass ratio of the solid electrolyte material to the thickener is 1: (0.15 to 0.35), for example, may be 1: 0.15, 1: 0.19, 1: 0.20, 1: 0.25, 1: 0.29, 1: 0.30, 1: 0.32, 1: 0.35, or the like, that is, any value within the range of 1: (0.15 to 0.35), without being particularly limited herein.

The mass of the solvent is 30% to 60% of the mass of the coating slurry. An excessively high content of the solvent makes the slurry thinner and excessively flowable, and inconveniences the operation in a slurry coating process. For example, the slurry is easy to flow on the isolation layer and difficult to retain. An excessively low content of the solvent makes the slurry hardly dispersible evenly and less viscous, thereby inconveniencing the coating operation and deteriorating the effect of the applied coating layer. For this reason, the mass of the solvent is 30% to 60%, for example, 30%, 34%, 39%, 40%, 44%, 49%, 50%, 54%, 56%, 58%, 60%, and so on, of the mass of the coating slurry, that is, any value within the range of 30% to 60%, without being particularly limited herein.

Optionally, the binder includes at least one of sodium carboxymethyl cellulose (CMC), styrene-butadiene rubber (SBR), or polyvinylidene fluoride (PVDF); and/or the dispersant includes at least one of hydrolyzed polymaleic anhydride, an acrylic acid block polymer, a polyester block polymer, polyethylene glycol-based polyol, or a polyethyleneimine derivative; and/or the thickener includes at least one of sodium hydroxymethyl cellulose, methyl cellulose, hydroxyethyl cellulose, hydroxypropyl methyl cellulose, polyacrylate salt, polyurethane, or polyether; and/or the solvent includes at least one of deionized water, N-N dimethylformamide (DMF), N-N methylpyrrolidone (NMP), N-N dimethylacetamide (DMAC), or tetrahydrofuran (THF).

The binder includes at least one of sodium carboxymethyl cellulose (CMC), styrene-butadiene rubber (SBR), or polyvinylidene fluoride (PVDF), which means that the binder may be one of the above substances or a combination of a plurality of the above substances.

The dispersant includes at least one of hydrolyzed polymaleic anhydride, an acrylic acid block polymer, a polyester block polymer, polyethylene glycol-based polyol, or a polyethyleneimine derivative, which means that the dispersant may be one of the above substances or a combination of a plurality of the above substances.

The thickener includes at least one of sodium hydroxymethyl cellulose, methyl cellulose, hydroxyethyl cellulose, hydroxypropyl methyl cellulose, polyacrylate salt, polyurethane, or polyether, which means that the thickener may be one of the above substances or a combination of a plurality of the above substances.

The solvent includes at least one of deionized water, N-N dimethylformamide (DMF), N-N methylpyrrolidone (NMP), N-N dimethylacetamide (DMAC), or tetrahydrofuran (THF), which means that the solvent may be one of the above substances or a combination of a plurality of the above substances. Understandably, when the solvent is a combination of a plurality of the above substances, the plurality of substances are of relatively high miscibility to each other.

This application provides a preparation method of a coating slurry, including the following steps: mixing a solid electrolyte material, a binder, and a solvent well to obtain a coating slurry.

In this step, the raw materials are blended together and mixed well to obtain a coating slurry containing the solid electrolyte material.

Optionally, the step of mixing a solid electrolyte material, a binder, and a solvent well to obtain a coating slurry includes the following step: mixing the solid electrolyte material, the binder, a dispersant, a thickener, and the solvent well to obtain the coating slurry.

In order to achieve high dispersivity of the coating slurry, a dispersant and a thickener are added into a mixture of the solid electrolyte material, the binder, and the solvent, and mixed well.

Optionally, the step of mixing a solid electrolyte material, a binder, a dispersant, a thickener, and the solvent well to obtain the coating slurry includes the following steps:
putting the solid electrolyte material into the solvent, and adding the dispersant to perform dispersion, so as to obtain a dispersion solution;
adding the thickener into the dispersion solution to perform secondary dispersion, so as to obtain a secondary dispersion solution; and
adding the binder into the secondary dispersion solution, and mixing well to obtain a coating slurry.

In order to obtain a slurry of higher homogeneity and higher dispersivity, the raw materials are added stepwise so that the raw materials are well dispersed, thereby making it convenient to uniformly distribute the solid electrolyte material in the coating finally prepared by coating the isolation layer.

Optionally, in the step of adding a dispersant to perform dispersion, the dispersion is performed by ultrasonication. The ultrasonication continues for a duration of 1 to 3 hours, and/or the ultrasonication is performed at a power of 0.3 W/cm² to 0.6 W/cm², and/or the ultrasonication is performed at a frequency of 25 kHz to 40 kHz.

With the dispersion performed by ultrasonication, the homogeneity of mixed materials is higher. The parameter settings of the ultrasonication device affect the dispersivity. Therefore, controlling the parameters of the ultrasonication device to fall within the following range is conducive to achieving a stronger dispersion effect. The ultrasonication continues for a duration of 1 to 3 hours, for example, 1 h, 2 h, 3 h, or the like, without being particularly limited herein. The ultrasonication is performed at a power of 0.3 W/cm² to 0.6 W/cm², for example, 0.3 W/cm², 0.4 W/cm², 0.5 W/cm², 0.6 W/cm², or the like, without being particularly limited herein. The ultrasonication is performed at a frequency of 25 kHz to 40 kHz, for example, 25 kHz, 30 kHz, 35 kHz, 38 kHz, 40 kHz, or the like, without being particularly limited herein.

Optionally, the step of adding the thickener into the dispersion solution to perform secondary dispersion so as to obtain a secondary dispersion solution includes the following step: adding the thickener into the dispersion solution, and stirring well to obtain the secondary dispersion solution.

In order to mix the thickener thoroughly with the solvent, the dispersant, and the solid electrolyte material, the mixture is stirred synchronously in the step of adding the thickener into the dispersion solution.

Optionally, in the stirring step, the stirring is performed at a rotation speed of 1000 rpm to 1600 rpm, and/or the stirring continues for a duration of 30 to 90 minutes.

In order to mix the thickener thoroughly with the solvent, the dispersant, and the solid electrolyte material, in the step of adding the thickener into the dispersion solution, the mixture is stirred synchronously. The stirring is performed at a rotation speed of 1000 rpm to 1600 rpm, for example, 1000 rpm, 1100 rpm, 1200 rpm, 1300 rpm, 1400 rpm, 1500 rpm, 1600 rpm, or the like. The stirring continues for a duration of 30 to 90 minutes, for example, 30 min, 40 min, 50 min, 60 min, 70 min, 80 min, 90 min, or the like, to obtain a well dispersed secondary dispersion solution.

Optionally, the step of adding the binder into the secondary dispersion solution and mixing well to obtain a coating slurry includes the following step: adding the binder into the secondary dispersion solution, and stirring well to obtain the coating slurry. To make the binder well mixed in the secondary dispersion solution, the mixture is stirred in the step of adding the binder into the secondary dispersion solution.

Optionally, in the stirring step, the stirring is performed at a rotation speed of 700 rpm to 1200 rpm, and/or the stirring continues for a duration of 30 to 60 minutes.

The stirring is performed at a rotation speed of 700 rpm to 1200 rpm, for example, 700 rpm, 800 rpm, 900rpm, 1000 rpm, 1100 rpm, 1200 rpm, or the like. The stirring continues for a duration of 30 to 60 minutes, for example, 30 min, 40 min, 50 min, 60 min, or the like, to obtain a well dispersed coating slurry.

This application further provides a preparation method of a separator, including the following steps:
preparing the first isolation layer and the second isolation layer, and applying a coating slurry onto one of the first isolation layer or the second isolation layer;
covering a surface of the coating slurry with the other of the first isolation layer or the second isolation layer, the surface being away from the one of the first isolation layer or the second isolation layer, so as to form an interlayer film; and
hot-pressing and oven-drying the interlayer film to obtain a separator.

In order to provide both sides of the coating with an isolation layer, a first isolation layer and a second isolation layer are prepared. The coating slurry is applied onto one of the first isolation layer or the second isolation layer, and the other of the first isolation layer or the second isolation layer overlays a surface of the coating slurry to form an interlayer film, the surface being away from the one of the first isolation layer or the second isolation layer. The interlayer film is hot-pressed and oven-dried to obtain a separator.

Optionally, the two isolation layers are the first isolation layer and the second isolation layer, and the first isolation layer and/or the second isolation layer includes a base film.

The base film is an organic microporous film. The organic microporous film is light in weight, thereby reducing the weight of the separator, and avoiding a decrease of the gravimetric energy density of a battery containing the separator.

Optionally, the first isolation layer and/or the second isolation layer further includes an inorganic coating.

The inorganic coating exhibits hardness to a degree, and can prevent lithium dendrites from penetrating the separator to some extent. The inorganic coating can provide overall mechanical strength of the separator, improve the insulativity of the separator, and improve the wettability of the separator to an electrolyte solution.

Optionally, in the step of applying a coating slurry onto one of the first isolation layer or the second isolation layer, a coating method used for applying the coating slurry is scrape coating.

In the step of coating the isolation layer with the coating slurry, appropriate conditions are required to prepare a qualified separator. For this purpose, the coating method is scrape coating, thereby improving the coating effect.

Optionally, the preparation method of the separator further satisfies at least one of conditions (1) to (3):
(1) in the step of hot-pressing and oven-drying the interlayer film to obtain a separator, the hot-pressing is performed at a temperature of 120 °C to 150 °C;
(2) in the step of hot-pressing and oven-drying the interlayer film to obtain a separator, the hot-pressing is performed with a pressure of 3 MPa to 8 MPa; or
(3) in the step of hot-pressing and oven-drying the interlayer film to obtain a separator, the oven-drying is performed under a vacuum condition at a temperature of 90 °C to 120 °C for a duration of 6 to 12 hours.

The hot-pressing process is performed at a temperature of 120 °C to 150 °C, for example, 120 °C, 130 °C, 140 °C, 150 °C, or the like, to achieve a superior hot-pressing effect.

The hot-pressing process is performed with a pressure of 3 MPa to 8 MPa, for example, 3 MPa, 4 MPa, 5 MPa, 6 MPa, 7 MPa, 8 MPa, or the like, to achieve a superior hot-pressing effect.

The oven-drying is performed under a vacuum condition at a temperature of 90 °C to 120 °C, for example, 90 °C, 100 °C, 110 °C, 120 °C, or the like. The oven-drying continues for a duration of 6 to 12 hours, for example, 6 h, 7 h, 8 h, 9 h, 10 h, 11 h, 12 h, or the like, to achieve a superior oven-drying effect.

This application further provides a battery. The battery includes the electrode assembly disclosed above.

The battery contains the separator disclosed above, so that the safety performance of the battery is improved.

This application further provides an electrical device. The electrical device includes the battery.

The electrical device contains the battery disclosed above, so that the safety performance of the electrical device is improved.

The separator disclosed in this application includes a first isolation layer, a coating, and a second isolation layer. The coating is disposed on at least one surface of the first isolation layer. The coating includes a solid electrolyte material. The second isolation layer is disposed on a surface of the coating, the surface being away from the first isolation layer. The solid electrolyte material can react with metallic lithium to absorb lithium dendrites to prevent the lithium dendrites from penetrating the separator. The first isolation layer and the second isolation layer disposed on two sides of the coating respectively can prevent the lithium dendrites from penetrating the separator, and the coating being disposed between the first isolation layer and the second isolation layer can prevent the coating from contacting a positive electrode or negative electrode to cause side reactions.

### BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below are merely a part of embodiments of this application. A person of ordinary skill in the art may derive other drawings from the illustrated structure without making any creative effort.
FIG. 1 is a schematic flowchart of preparing a coating slurry according to this application;
FIG. 2 is a schematic flowchart of a preparation method of a separator according to this application;
FIG. 3 is a schematic structural diagram of a separator according to an embodiment of this application;
FIG. 4 is a schematic structural diagram of a separator according to another embodiment of this application;
FIG. 5 is a schematic structural diagram of a separator according to another embodiment of this application;
FIG. 6 is a schematic structural diagram of a separator according to another embodiment of this application;
FIG. 7 is a schematic structural diagram of a separator according to another embodiment of this application;
FIG. 8 is a schematic structural diagram of a separator according to another embodiment of this application;
FIG. 9 is a schematic structural diagram of a separator according to another embodiment of this application; and
FIG. 10 is a schematic structural diagram of a separator according to another embodiment of this application.

List of reference numerals:

| Reference numeral | Name | Reference numeral | Name |
|---|---|---|---|
| 100 | separator | 20 | isolation layer |
| 10 | coating | 21 | organic microporous film |
| 11 | first surface | 23 | ceramic layer |
| 13 | second surface | | |

The objective fulfillment, functional characteristics, and advantages of this application are described below in more detail with reference to the drawings.

### DETAILED DESCRIPTION OF EMBODIMENTS

The following clearly and thoroughly describes the technical solutions in some embodiments of this application with reference to the drawings appended hereto. Evidently, the described embodiments are merely a part of but not all of the embodiments of this application. All other embodiments derived by a person of ordinary skill in the art based on the embodiments of this application without making any creative efforts still fall within the protection scope of this application.

It is hereby noted that all directional indicators (for example, up, down, left, right, front, back, and so on) in the embodiments of this application are merely used to explain a relative position relationship, movement state and the like between components in a specific posture (as shown in the drawings). When the specific posture changes, the directional indicators change accordingly.

In this application, unless otherwise expressly specified and qualified, the terms such as "connection" and "fixing" need to be understood in a broad sense, for example, understood as a fixed connection or a detachable connection or understood as being integrated into a whole; or understood as a mechanical connection or an electrical connection, a direct connection or an indirect connection implemented through an intermediary; or understood as interior communication between two components or interaction between two components. A person of ordinary skill in the art is able to understand the specific meanings of the terms in this application according to specific situations.

In addition, the terms such as "first" and "second" used herein are merely intended for ease of description, but not understood as indicating or implying priority or implicitly specifying the number of technical features mentioned. Therefore, the features preceded by "first" or "second" may explicitly or implicitly include at least one of such features. In addition, the term "and/or" used herein means three parallel solutions. For example, "A and/or B" means A, or B, or both A and B. In addition, the technical solutions of different embodiments may be combined with each other to the extent practicable by a person of ordinary skilled in the art. When a combination of technical solutions is contradictory or impracticable, the combination of technical solutions is considered to be nonexistent and fall outside the protection scope claimed by this application.

Batteries mentioned in this field may be classed into a primary battery and a rechargeable battery depending on rechargeability. Currently, common types of rechargeable batteries include: lead-acid battery, nickel-metal hydride battery, and lithium-ion battery. The lithium-ion battery is widely applied to battery electric vehicles and hybrid vehicles currently. The lithium-ion battery for use in such vehicles possesses a relatively low capacity, but a relatively high output current, a relatively high charge current, and a long lifespan in spite of a relatively high cost.

The battery described in the embodiments of this application means a rechargeable battery. The following describes some embodiments of this application by primarily using a lithium-ion battery as an example. Understandably, the disclosed embodiments of this application are applicable to any other suitable types of rechargeable batteries. A battery mentioned in an embodiment disclosed herein is directly or indirectly applicable to an appropriate device to power the device.

The battery mentioned in an embodiment disclosed herein means a single physical module that includes one or more battery cells to provide a preset voltage and a preset capacity. A battery cell is an elementary unit of the battery. Depending on the form of packaging, battery cells are generally classed into three types: cylindrical cell, prismatic cell, and pouch cell. The following description mainly focuses on a prismatic cell. Understandably, the embodiments described below are applicable to cylindrical cells or pouch cells in some aspects.

A battery cell includes a positive electrode plate, a negative electrode plate, an electrolyte solution, and a separator. A lithium-ion battery cell works primarily by movement of lithium ions between the positive electrode plate and the negative electrode plate. A thin film structure compounded of three layers of materials in a cylindrical cell is wound into a cylinder-shaped electrode assembly. The thin film structure in a prismatic cell is wound or stacked to form an electrode assembly in the approximate shape of a cuboid.

In a typical battery cell structure, a battery cell includes a shell, an electrode assembly, and an electrolyte solution. The electrode assembly is accommodated in the shell of the battery cell. The electrode assembly includes a positive electrode plate, a negative electrode plate, and a separator. The shell includes a housing and an end cap. The shell includes an accommodation cavity formed by a plurality of walls and includes an opening. The end cap is disposed at the opening to seal the accommodation cavity. The accommodation cavity further accommodates an electrolyte solution in addition to the electrode assembly. The positive electrode plate and the negative electrode plate in the electrode assembly each include a tab. To prevent a large electrical current from tripping the circuit, a plurality of positive tabs are stacked together, and a plurality of negative tabs are stacked together. Through a connecting component, the tabs are electrically connected to electrode terminals located outside the battery cell. The electrode terminals generally include a positive electrode terminal and a negative electrode terminal. For a prismatic cell, the electrode terminals are generally disposed at the end cap part. A plurality of battery cells are connected together in series and/or in parallel through electrode terminals, so as to be applied in various scenarios.

In high-power application scenarios such as electric vehicles, a battery is applied in different hierarchical forms such as a battery cell, a battery module, and a battery. The battery module is formed by electrically connecting a specific quantity of battery cells together and putting the battery cells into a frame, so as to protect the battery cells from external impact, heat, vibration, and the like. The battery is a final state of a battery system mounted in an electric vehicle. A battery typically includes a box configured to package one or more battery cells. The box generally includes a cover and a box shell.

A plurality of mounting points for connecting to the vehicle body are disposed on the rim of the box or in the middle of the box shell. In order to improve the stability of the connection between the vehicle body and the battery, a mounting portion is usually disposed at the mounting points.

In some battery production and processing technologies, a plurality of battery cells are integrated to form a battery module first, and then the battery module is packaged in the battery box to form a battery pack or battery box.

A typical battery module generally includes two end plates. A plurality of battery cells are arranged between the two end plates. An end plate equipped with an output electrode of the battery module is also referred to as an output electrode end plate. An end plate without the output electrode of the battery module is also referred to as a non-output electrode end plate.

A plurality of battery modules in one row may be packaged in the battery pack, or a plurality of battery modules in a plurality of rows may be packaged in the battery pack. The plurality of battery modules in a plurality of rows may be arranged in double rows and multiple columns, multiple rows and double columns, multiple rows and multiple columns, or the like. Taking a battery pack containing double rows and multiple columns of battery modules as an example, the first end plate of each column is generally a head output electrode plate. The two adjacent end plates between two rows of battery modules are middle non-output electrode end plates. The last end plate of each column is a tail non-output electrode end plate. The head output electrode end plate and one of the middle non-output electrode end plates belong to the first row of battery modules. One of the middle non-output electrode end plates and the tail output electrode end plate belong to the second row of battery modules.

The battery module is packaged into the battery box by means of tooling. A clamping mechanism for clamping the battery module, such as a claw or a suction cup, is usually disposed on the tooling. When a battery module is packaged by using tooling that includes a claw, a claw groove that matches the claw is generally disposed on one side, oriented away from the battery cell, of the end plate, so that the claw can be inserted into the claw groove to clamp and transport the battery module.

The development of the battery technology needs to consider a variety of design factors, including performance parameters such as energy density, cycle life, discharge capacity, charge rate, and discharge rate, and also needs to consider the production cost and processing process of the batteries, so as to improve the quality and production efficiency of the batteries.

In a lithium battery in the related art, to a degree depending on the composition of the battery, the way in which the battery is used, and the like, dendrites of metallic lithium sometimes grow from a negative active material layer to a positive active material layer during charge-discharge cycling, thereby causing an internal short circuit.

It is understandable herein that lithium batteries include a lithium metal battery or a lithium-ion battery.

To solve the above problems, this application provides a separator 100, so as to avoid growth of dendrites of metallic lithium through the separator 100 and improve safety of a battery in use.

The separator disclosed in this application includes a first isolation layer, a coating, and a second isolation layer. The coating is disposed on at least one surface of the first isolation layer. The coating includes a solid electrolyte material. The second isolation layer is disposed on a surface of the coating, the surface being away from the first isolation layer.

Separator: In the structure of a lithium battery, a separator is one of key inner-layer components. The performance of the separator decides an interface structure, an internal resistance, and the like of the battery, and directly affects the capacity, cycle performance, and safety performance of the battery. Excellent performance of the separator plays an important role in improving the overall performance of the battery. A main function of the separator is to separate a positive electrode from a negative electrode of the battery to prevent the two electrodes from contacting each other and causing a short circuit. In addition, the separator also serves a function of allowing electrolyte ions to pass through.

Isolation layer: The isolation layer is a component configured to isolate the structures on two sides of the isolation layer to avoid direct contact between the structures on the two sides of the isolation layer. For example, the isolation layer may be an organic material layer or an inorganic material layer (for example, including but not limited to a ceramic layer). Alternatively, the isolation layer may be a composite of an organic material layer and an inorganic material layer.

Negative electrode: A battery electrode that releases electrons during discharge of an electrochemical cell is referred to as a negative electrode. For example, in a lithium-ion battery, a material on the negative electrode side is a graphite layer.

Positive electrode: An electrode that absorbs electrons during discharge of an electrochemical cell is referred to as a positive electrode. For example, in a lithium-ion battery, a material on the positive electrode side may be a ternary material.

Electrolyte: Electrolyte refers to a substance capable of conducting ions. For example, in a lithium-ion battery, the electrolyte exists in a separator and can conduct lithium ions back and forth between a positive electrode and a negative electrode.

In a lithium battery, lithium dendrites growing on the negative electrode side are prone to penetrate the separator and cause electrical conduction between the positive electrode and the negative electrode, thereby giving rise to hazards. In this application, a coating includes a solid electrolyte material. The solid electrolyte material can react with metallic lithium to consume metallic lithium and absorb the lithium dendrites to prevent the lithium dendrites from growing continuously and penetrating the separator. To increase the overall mechanical strength of the separator, a first isolation layer and a second isolation layer are disposed on two sides of the coating respectively to prevent the lithium dendrites from penetrating the separator. In addition, the coating is disposed between the first isolation layer and the second isolation layer, thereby preventing the coating from contacting a positive electrode or negative electrode to cause side reactions.

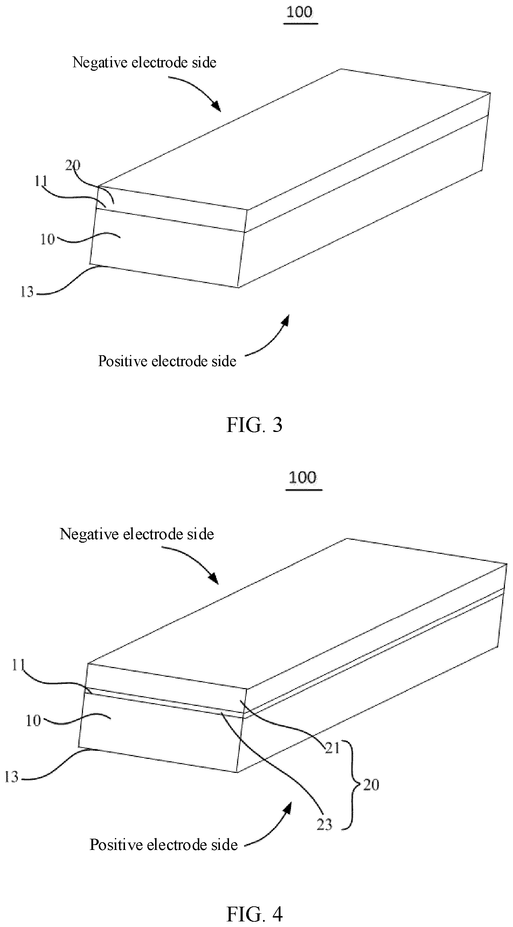

Understandably, as shown in FIG. 3, an isolation layer 20 is disposed on one side of the coating 10, the side being oriented toward the negative electrode. In this way, the solid electrolyte material in the coating 10 is prevented from directly contacting the lithium metal on the negative electrode side. The direct contact leads to excessive reactions and loss of capacity of the lithium battery.

Understandably, in a lithium metal battery, in a case that lithium is used as a negative electrode, when the solid electrolyte material in the coating 10 contacts the lithium negative electrode, the solid electrolyte material reacts with the lithium metal. Therefore, an isolation layer 20 is disposed on one side of the coating 10, the side being oriented toward the negative electrode, so as to prevent the solid electrolyte material in the coating 10 from directly contacting the lithium metal on the negative electrode side. The direct contact leads to excessive reactions and loss of capacity of the lithium battery.

At the same time, in the lithium-ion battery, elemental lithium is deposited on the surface of the negative electrode, thereby forming so-called dead lithium. In this case, when the solid electrolyte material in the coating 10 contacts the elemental lithium, the solid electrolyte material reacts with the elemental lithium, thereby causing loss of capacity of the lithium battery. Therefore, an isolation layer 20 is disposed on one side of the coating 10, the side being oriented toward the negative electrode.

For example, as shown in FIG. 3, the isolation layer 20 is disposed on a first surface 11 of the coating 10, the first surface being oriented toward the negative electrode. Understandably, in some embodiments, if the solid electrolyte material is exposed on just a part of the first surface 11 of the coating 10, then the isolation layer 20 may be a hollow layered structure, and the isolation layer 20 is configured to cover the solid electrolyte material exposed on the first surface 11.

Further, the first isolation layer and/or the second isolation layer includes a base film.

The base film is an organic microporous film, that is, a microporous film structure formed from an organic material.

The organic microporous film is light in weight, thereby reducing the weight of the separator 100, and avoiding a decrease of the gravimetric energy density of a battery containing the separator 100.

Understandably, in an embodiment, the first isolation layer includes a base film, but the second isolation layer includes no base film. In another embodiment, the first isolation layer includes no base film, but the second isolation layer includes a base film. In another embodiment, the first isolation layer and the second isolation layer each include a base film.

Further, the first isolation layer and/or the second isolation layer further includes an inorganic coating.

The inorganic coating means a structure containing an inorganic material. For example, examples of the inorganic coating include, but are not limited to, a ceramic layer.

The inorganic coating exhibits hardness to a degree, and can prevent lithium dendrites from penetrating the separator to some extent. The inorganic coating can provide overall mechanical strength of the separator, improve the insulativity of the separator, and improve the wettability of the separator to an electrolyte solution.

The first isolation layer and/or the second isolation layer further includes an inorganic coating. Understandably, the first isolation layer includes an inorganic coating, and the second isolation layer includes no inorganic coating; or, the first isolation layer includes no inorganic coating, and the second isolation layer includes an inorganic coating; or, the first isolation layer and the second isolation layer each include an inorganic coating.

Understandably, the first isolation layer and the second isolation layer each include a multi-layer structure. In the multi-layer structure, at least one layer is an inorganic coating, and at least one other layer is a layer of another material, without being particularly limited herein. For example, the multi-layer structure is a two-layer structure, in which one layer is an inorganic coating, and the other layer is an organic material layer. When the isolation layer includes no inorganic coating, the isolation layer may be an organic material layer.

In an embodiment, as shown in FIG. 4, the isolation layer 20 includes a ceramic layer 23. On the one hand, the ceramic layer 23 can prevent lithium dendrites from penetrating the separator 100. The ceramic layer 23 is hard to a degree and can block the lithium dendrites to some extent. On the other hand, the ceramic layer 23 can increase the overall mechanical strength of the separator 100, improve the insulativity of the separator 100, and improve the wettability of the separator 100 to the electrolyte solution.

Further, the first isolation layer includes a base film and an inorganic coating. The inorganic coating is disposed on at least one surface of the base film; and/or, the second isolation layer includes a base film and an inorganic coating, and the inorganic coating is disposed on at least one surface of the base film.

The base film is an organic microporous film. Compared with the inorganic coating, the organic microporous film is lighter in weight, thereby reducing the weight of the separator, and avoiding a decrease of the gravimetric energy density of the battery containing the separator. The isolation layer containing the base film and the inorganic coating can reduce the thickness of the inorganic coating and increase the gravimetric energy density of the battery.

Understandably, the first isolation layer includes a base film and an inorganic coating, and the inorganic coating is disposed on at least one surface of the base film, indicating that, with the coating 10 as a reference, the inorganic coating may be disposed on one side of the base film, the side being oriented toward the coating 10. In this way, the inorganic coating is located between the coating 10 and the base film. Alternatively, the inorganic coating may be disposed on one side of the base film, the side being oriented away from the coating 10. In this way, the base film is located between the coating 10 and the inorganic coating. The specific arrangement is not limited.

Understandably, the second isolation layer includes a base film and an inorganic coating, and the inorganic coating is disposed on at least one surface of the base film, indicating that, with the coating 10 as a reference, the inorganic coating may be disposed on one side of the base film, the side being oriented toward the coating 10. In this way, the inorganic coating is located between the coating 10 and the base film. Alternatively, the inorganic coating may be disposed on one side of the base film, the side being oriented away from the coating 10. In this way, the base film is located between the coating 10 and the inorganic coating. The specific arrangement is not limited.

Considering that the inorganic material contains some active materials that react with lithium, in order to prevent the inorganic coating from directly contacting and parasitically reacting with the lithium on the negative electrode side, the inorganic coating is disposed on one side of the base film, the side being oriented toward the coating. In other words, the inorganic coating is located between the base film and the coating. For example, as shown in FIG. 4, a ceramic layer is used as the inorganic coating, an organic microporous film is used as the base film, and the ceramic layer 23 is disposed on one side of the organic microporous film 21, the side being oriented toward the first surface 11 of the coating 10.

In other words, as shown in FIG. 4, the organic microporous film 21 and the ceramic layer 23 are disposed on the first surface 11 of the coating 10, and the ceramic layer 23 is disposed on one side of the organic microporous film 21, the side being oriented toward the first surface 11. That is, the ceramic layer 23 is disposed between the organic microporous film 21 and the coating 10. An amount of active material that reacts with lithium exists in the ceramic layer. Therefore, in order to prevent the ceramic layer 23 from directly contacting and parasitically reacting with the lithium on the negative electrode side, the ceramic layer 23 is disposed between the organic microporous film 21 and the coating 10 to avoid direct contact between the ceramic layer 23 and the lithium on the negative electrode side. In addition, the ceramic layer 23 is disposed on the negative electrode side but is not in direct contact with the negative electrode side, thereby preventing dendrites from piercing the separator and playing a protective role. At the same time, the ceramic layer 23 can serve as an insulation layer to avoid conduction between the positive electrode and negative electrode and to increase the mechanical strength of the separator 100.

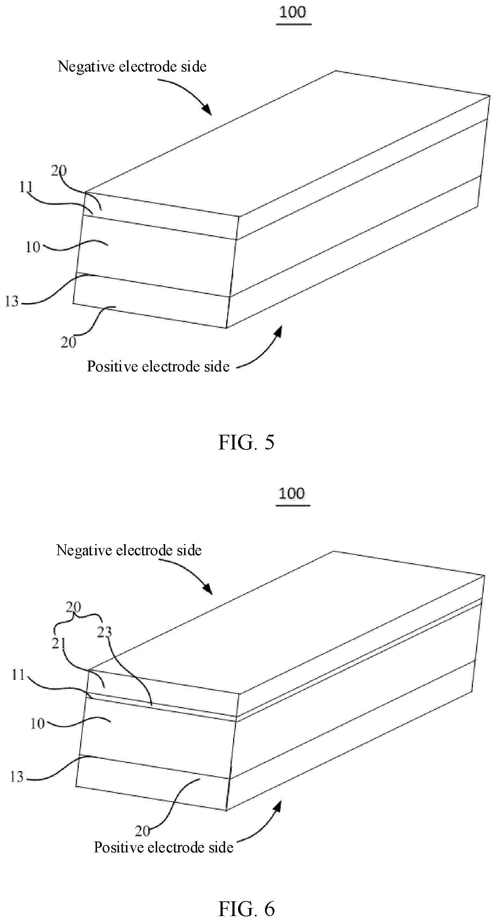

As shown in FIG. 5 and FIG. 6, the separator 100 further includes another isolation layer 20. The other isolation layer 20 is disposed on the second surface 13 of the coating 10. Understandably, the first isolation layer and the second isolation layer mentioned above are disposed on two opposite surfaces of the coating 10 respectively.

In order to further increase the physical strength of the separator and prevent the coating 10 from directly contacting the positive electrode side, the separator 100 further includes another isolation layer 20. The other isolation layer 20 is disposed on the second surface 13 of the coating 10. In other words, as shown in FIG. 5, the coating 10 is disposed between the two isolation layers 20.

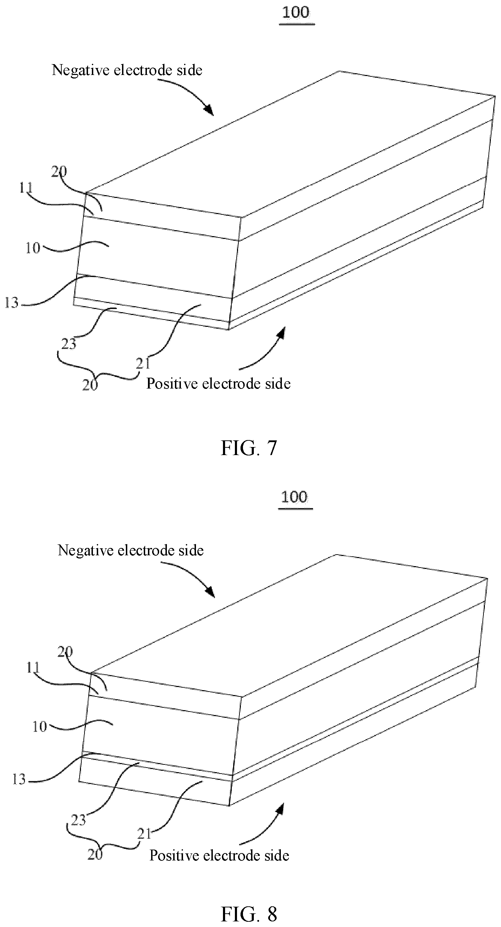

As shown in FIG. 7 or FIG. 8, the other isolation layer 20 includes a ceramic layer 23.

With the other isolation layer 20 containing the ceramic layer 23, on the one hand, the ceramic layer 23 can prevent lithium dendrites from penetrating the separator 100. The ceramic layer 23 is hard to a degree and can block the lithium dendrites to some extent. On the other hand, the ceramic layer 23 can increase the overall mechanical strength of the separator 100, and improve the insulativity of the separator 100.

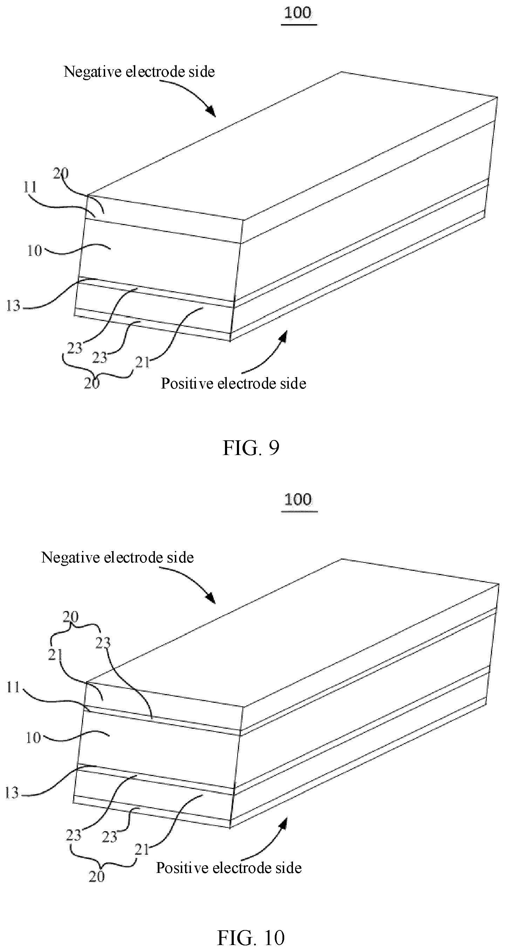

As shown in FIG. 9 or FIG. 10, the other isolation layer 20 includes a ceramic layer 23 and an organic microporous film 21.

Compared with the ceramic structure, the organic microporous film 21 is lighter, thereby making the separator 100 more lightweight, and avoiding a decrease of the gravimetric energy density of the battery containing the separator 100. The other isolation layer 20 containing the ceramic layer 23 and the organic porous film 21 can reduce the thickness of the ceramic layer 23 and increase the gravimetric energy density of the battery.

As shown in FIG. 7, the ceramic layer 23 is disposed on one side of the organic microporous film 21, the side being oriented away from the second surface 13. In other words, the ceramic layer 23 is disposed on the positive electrode side and located outermost. The arrangement in which the ceramic layer 23 is disposed on the positive electrode side can also prevent dendrites from piercing the separator 100, and play a final protective role. At the same time, the ceramic layer 23 can serve as an insulation layer to avoid conduction between the positive electrode and the negative electrode. In addition, the organic microporous film 21 is relatively hydrophobic and exhibits low affinity for highly polar electrolyte solutions. Therefore, the organic microporous film 21 is unable to absorb and retain the electrolyte solution. The hydrophilic ceramic layer 23 in use can effectively alleviate this problem. The ceramic layer 23 located outermost makes it convenient to absorb and retain the electrolyte solution, and improves the heat resistance and mechanical properties of the separator 100, thereby improving the performance and safety of the battery.

As shown in FIG. 8, the organic microporous film 21 is disposed on one side of the ceramic layer 23, the side being oriented away from the second surface 13. In other words, the ceramic layer 23 is disposed between the coating 10 and the organic microporous film 21. The ceramic layer 23 prevents dendrites from piercing the separator 100, and plays a protective role.

As shown in FIG. 7, the ceramic layer 23 is disposed on one side of the organic microporous film 21, the side being oriented away from the second surface 13. As shown in FIG. 8, the organic microporous film 21 is disposed on one side of the ceramic layer 23, the side being oriented away from the second surface 13. As shown in FIG. 9, the ceramic layer 23 is disposed on both sides of the organic microporous film 21 to further prevent dendrites from piercing the separator 100, play a protective role, and increase the mechanical strength of the separator 100. As shown in FIG. 10, the ceramic layer 23 may be disposed on the organic microporous films 21 on both the first surface 11 and the second surface 13 of the coating 10 to further prevent dendrites from piercing the separator 100, play a protective role, and increase the mechanical strength of the separator 100.

Furthermore, the polymer on the surface of the base film carries a polar functional group. In other words, the polymer on the surface of the organic microporous film 21 carries a polar functional group.

To enhance the adhesion of the organic microporous film 21 to the ceramic layer 23 or the surface of the coating 10, the polymer on the surface of the organic microporous film 21 carries a polar functional group, thereby increasing the surface energy, enhancing adhesion, and making it convenient for the electrolyte solution to infiltrate. The polymer on the surface of the organic microporous film 21 can be activated by plasma surface modification or corona treatment, thereby converting the non-polar polymer to a polar polymer, and increasing the surface energy.

Further, the solid electrolyte material exhibits lithium-ion conductivity. Optionally, at 25 °C, an ion conductivity of the coating ranges from 0.5 S/cm to 5 S/cm.

The solid electrolyte material exhibits lithium-ion conductivity, indicating that the material is capable of conducting ions. In other words, the material may be a solid electrolyte capable of reacting with lithium metal and conducting lithium ions. For example, the solid electrolyte material is a solid electrolyte containing Li, P, S, and M, where M is Ge, Si, Sn, or a combination thereof. The solid electrolyte material is Li_{3.25}Ge_{0.25}P_{0.75}S₄, Li₁₀GeP₂S₁₂, Li₁₀SnP₂S₁₂, Li₁₁Si₂PS₁₂, or Li₄GeS₄-Li₃PS₄ glass ceramics, or a Li-Si-PS-Cl solid electrolyte of an LGPS structure, or a combination thereof.

At 25 °C, the ionic conductivity of the coating ranges from 0.5 S/cm to 5 S/cm. To the extent of the above range, the ionic conductivity of the coating may be a maximum value, a minimum value, or any value between the maximum value and the minimum value within the above range. For example, the ionic conductivity may be, but is not limited to, 0.5 S/cm, 0.8 S/cm, 1 S/cm, 1.5 S/cm, 1.8 S/cm, 2 S/cm, 2.5 S/cm, 2.8 S/cm, 3 S/cm, 3.5 S/cm, 3.8 S/cm, 4 S/cm, 4.5 S/cm, 4.8 S/cm, 5 S/cm, or the like.

Further, the solid electrolyte material includes at least one of lithium aluminum titanium phosphate, lithium titanium phosphate, lithium tetrathiophosphate, lithium germanium phosphorus sulfide, or lithium phosphorus sulfur chloride.

With the solid electrolyte material being at least one of lithium aluminum titanium phosphate, lithium titanium phosphate, lithium tetrathiophosphate, lithium germanium phosphorus sulfide, or lithium phosphorus sulfur chloride, such substances are solid electrolyte materials and exhibit some ionic conductivity and a relatively low electronic conductivity. When used as an electrolyte material, such substances exhibit relatively high ion conductivity and electronic insulativity. Therefore, when used as a separator coating, such substances can avoid a significant increase of the separator impedance and suppress electrons from being transferred through the separator. In addition, such substances are gradually lithiated after contacting lithium. The lithiation process is accompanied by a change in the valence state of the transition metal element. Therefore, when used as an intermediate coating of the separator, such substances can react with lithium dendrites that are prone to pierce the separator, thereby preventing the lithium dendrites from continuing to grow.

For example, using lithium aluminum titanium phosphate as an example, the lithium aluminum iron phosphate (LATP) as a solid electrolyte exhibits relatively high ion conductivity. When the lithium aluminum titanium phosphate is in direct contact with the negative electrode side, the LATP readily reacts with lithium metal, so as to reduce Ti⁴⁺ in the LATP to Ti³⁺. In this way, electronic conduction occurs in the lithium-ion conductor LATP, thereby reducing the stability of LATP to a lithium sheet. Therefore, the LATP is not suitable for direct use as a solid electrolyte. However, the LATP in contact with lithium is of high activity, and can be used as a separator coating to consume lithium dendrites that grow on the negative electrode side, and to prevent the dendrites from piercing the separator.

Currently, it is known that lithium aluminum titanium phosphate used as a separator coating slurry and doped with agents such as an additive and a thickener can achieve the effects of improving the ionic conductivity of the separator and supplementing lithium. Currently, when serving as a separator coating, the lithium aluminum iron phosphate is directly exposed on the negative electrode side. The lithium aluminum iron phosphate is reactive with lithium, and readily reacts with the negative electrode side when applied on a single side, thereby resulting in loss of active lithium and consumption of the electrolyte solution. Therefore, the separator 100 of this application is used instead, and an isolation layer 20 is disposed on one side of the coating 10 on which the lithium aluminum iron phosphate is located, the side being oriented toward the negative electrode, thereby preventing the lithium aluminum iron phosphate in the coating 10 from directly contacting and parasitically reacting with the lithium metal on the negative electrode side to result in a loss of capacity of the lithium battery.

In the composite-layered separator 100 in this application, an isolation layer 20 is disposed on one side of the coating 10, the side being oriented toward the negative electrode. The lithium dendrites generated on the negative electrode side are absorbed by the solid electrolyte material when penetrating the isolation layer 20, thereby suppressing the growth of the lithium dendrites and preventing the battery from short-circuiting. During charge-discharge cycling of the lithium battery, lithium dendrites are inevitably generated. The lithium dendrites keep growing and eventually contact and pierce the isolation layer 20 on the negative electrode side, and contact the solid electrolyte material in the coating 10. The constituents of the solid electrolyte material, such as lithium aluminum titanium phosphate and lithium titanium phosphate, can undergo redox reactions with lithium to oxidize elemental lithium into lithium ions to be "stored" in the coating 10, thereby absorbing the lithium dendrites in time and avoiding further growth of the lithium dendrites.

Understandably, the material of the coating 10 may be solely the above solid electrolyte material. In addition, in some cases, the coating 10 may further include other electrolyte materials. Such electrolyte materials are not reactive with lithium metal. In some cases, the coating 10 may further include a substance capable of reacting with the lithium metal but incapable of conducting ions. The specific technical solution may be selected by a person skilled in the art as actually required, without being particularly limited herein.

Further, the particle diameter Dᵥ₅₀ of the solid electrolyte material is 50 nm to 5 µm.

Dᵥ₅₀ is a particle diameter corresponding to a point at which the cumulative volume distribution percent reaches 50% in a volume-based particle size distribution curve of a specimen. The physical meaning of this term is a particle diameter value than which 50% of the particles in a specimen are larger in diameter and 50% of the particles are smaller. Dᵥ₅₀ is also referred to as a median diameter.

A method for determining Dᵥ₅₀ in particle size distribution is: Taking a clean beaker, adding an appropriate amount of a specimen. Adding a surfactant dropwise and then adding a dispersant. Sonicating the mixture at a power of 120 W for 5 minutes to ensure that the specimen is thoroughly dispersed in the dispersant. Pouring the specimen into a specimen in-feed tower so that the specimen is circulated to a testing optical path system along with the solution. Irradiating the particles with a laser beam, receiving the scattered light, and measuring the energy distribution of the scattered light to obtain particle size distribution characteristics of the particles (shading degree: 8% to 12%).

When the particle diameter of the solid electrolyte material powder is excessively large, the viscosity of the slurry is relatively high during the slurry preparation, and the homogeneity of the slurry is not easily ensured, thereby making it difficult to apply the slurry onto the isolation layer 20. In addition, the "powder shedding" phenomenon is prone to occur during the coating. The powder is hardly attachable to the surface of the isolation layer 20, thereby making the coating effect unsatisfactory and undesirable. If the particle diameter is excessively small, the particles are prone to block the pores on the surface of the isolation layer 20 during coating, thereby reducing the air permeability of the isolation layer 20, and blocking the ion transfer channel, and evidently impairing the capacity and cycle life of the battery. For this reason, the particle diameter Dᵥ₅₀ of the solid electrolyte material is 50 nm to 5 µm, for example, may be 50 nm, 100 nm, 500 nm, 800 nm, 1 µm, 2 µm, 3 µm, 4 µm, 5 µm, or the like, that is, any value within the range of 50 nm to 5 µm, without being particularly limited herein.

Further, the particle diameter Dᵥ₅₀ of the solid electrolyte material is 50 nm to 500 nm.

When the particle diameter Dᵥ₅₀ of the solid electrolyte material falls within the range of 50 nm to 500 nm, the preparation effect and coating effect of the slurry are superior. For example, the particle diameter Dᵥ₅₀ of the solid electrolyte material may be 50 nm, 100 nm, 200 nm, 300 nm, 400 nm, 500 nm, or the like, that is, any value within the range of 50 nm to 500 nm, without being particularly limited herein.

Further, the thickness of the coating is 0.5 µm to 5 µm.

When the thickness of the coating is excessively large, the internal resistance of the separator 100 increases, and it is more difficult for lithium ions to pass through the separator, thereby resulting in a decline in the battery performance. When the thickness of the coating is excessively small, the coating absorbs elemental lithium in an excessively small amount. When lithium dendrites grow in large quantities, the dendrites are prone to penetrate the separator. For this reason, the thickness of the coating is 0.5 µm to 5 µm, for example, may be 0.5 µm, 1 µm, 2 µm, 3 µm, 4 µm, 5 µm, or the like, that is, any value within the range of 0.5 µm to 5 µm, without being particularly limited herein.

Further, the thickness of the inorganic coating is 1 µm to 5 µm.

The thickness of the inorganic coating needs to avoid being excessively thick and excessively thin. If the inorganic coating is excessively thin, the supporting strength of the separator is insufficient, and the electrolyte solution produces a weak infiltration effect. If the inorganic coating is excessively thick, the energy density decreases. For this reason, the thickness of the inorganic coating is 1 µm to 5 µm, for example, may be 1 µm, 2 µm, 3 µm, 4 µm, 5 µm, or the like, that is, any value within the range of 1 µm to 5 µm, without being particularly limited herein.

Understandably, when the separator includes a plurality of inorganic coatings, the thickness of the inorganic coating is a total thickness of the plurality of inorganic coatings.

Further, the thickness of the inorganic coating is 1.5 µm to 3.5 µm.

When the thickness of the inorganic coating falls within the range of 1.5 µm to 3.5 µm, the mechanical properties and wettability of the separator are superior. For example, the thickness of the inorganic coating is 1.5 µm, 2 µm, 2.5 µm, 3 µm, 3.5 µm, or the like, that is, any value within the range of 1.5 µm to 3.5 µm, without being particularly limited herein.

Further, the particle diameter Dᵥ₅₀ of the inorganic material contained in the inorganic coating is 0.01 µm to 10 µm.

The inorganic coating is made of the inorganic material. The particle diameter of the inorganic material affects the porosity and strength of the inorganic coating. When the particle diameter Dᵥ₅₀ of the inorganic material contained in the inorganic coating is 0.01 µm to 10 µm, the mechanical properties and wettability of the inorganic coating are superior. For example, the particle diameter Dᵥ₅₀ of the inorganic material contained in the inorganic coating is 0.01 µm, 0.05 µm, 0.1 µm, 1 µm, 2 µm, 3 µm, 4 µm, 5 µm, 6 µm, 7 µm, 8 µm, 9 µm, 10 µm, or the like, that is, any value within the range of 0.01 µm to 10 µm, without being particularly limited herein.

Further, the particle diameter Dᵥ₅₀ of the inorganic material contained in the inorganic coating is 0.05 µm to 0.5 µm.

When the particle diameter Dᵥ₅₀ of the inorganic material contained in the inorganic coating is 0.05 µm to 0.5 µm, the performance of the inorganic coating is higher. For example, the particle diameter Dᵥ₅₀ of the inorganic material contained in the inorganic coating is 0.05 µm, 0.1 µm, 0.2 µm, 0.3 µm, 0.4 µm, 0.5 µm, or the like, that is, any value within the range of 0.05 µm to 0.5 µm, without being particularly limited herein.

Further, the inorganic material contained in the inorganic coating includes at least one of Al oxide, Al nitride, Si oxide, Si nitride, Fe oxide, Fe nitride, Fe oxyacid salt, Sn oxide, Ti oxide, Ti nitride, Cu oxide, Cu nitride, Mn oxide, Ge oxide, Zr oxide, Zn oxide, or Ni oxide.

The inorganic powder used in the inorganic coating is an inorganic particle suitable for use as an inorganic coating of this application, and is not particularly limited herein, and may be inorganic particles currently applied in the field of separators, such as inorganic particles of superior properties such as high mechanical strength, high electrochemical stability, and high wettability by the electrolyte solution. For example, the inorganic material contained in the inorganic coating includes at least one of Al oxide, Al nitride, Si oxide, Si nitride, Fe oxide, Fe nitride, Fe oxyacid salt, Sn oxide, Ti oxide, Ti nitride, Cu oxide, Cu nitride, Mn oxide, Ge oxide, Zr oxide, Zn oxide, or Ni oxide.

Further, an inorganic material contained in the inorganic coating includes at least one of Al₂O₃, SiO₂, ZnO, Fe₂O₃, NiO, CuO, or TiO₂.

Cost-effective inorganic materials can save cost. For example, Al oxides include Al₂O₃, Si oxides include SiO₂, Zn oxides include ZnO, Fe oxides include Fe₂O₃, Ni oxides include NiO, Cu oxides include CuO, and Ti oxides include TiO₂; and the inorganic material includes at least one of Al₂O₃, SiO₂, ZnO, Fe₂O₃, NiO, CuO, or TiO₂.

Understandably the main constituents of the inorganic coating include nanoparticles of aluminum and silicon oxides. These nanoparticles make the separator resistant to high temperature, provide a hydrophilic surface, improve the wettability by the electrolyte solution, promote the migration of active particles by interacting with anions in the electrolyte solution, and act as a barrier to prevent lithium dendrites from piercing the separator and causing a short circuit of the battery.

Further, the thickness of the base film is 3 µm to 30 µm.

If the base film is excessively thin, the mechanical strength of the separator is excessively weak, and is adverse to coating the base film with the electrolyte slurry. If the base film is excessively thick, the internal resistance of the battery increases. For this reason, the thickness of the base film is 3 µm to 30 µm, for example, may be 3 µm, 5 µm, 7 µm, 9 µm, 10 µm, 13 µm, 15 µm, 17 µm, 20 µm, 21 µm, 22 µm, 23 µm, 24 µm, 25 µm, 26 µm, 27 µm, 28 µm, 29 µm, 30 µm, or the like, that is, any value within the range of 3 µm to 30 µm, without being particularly limited herein.

Further, the thickness of the base film is 5 µm to 25 µm.

When the thickness of the base film falls within the range of 5 µm to 25 µm, the performance of the separator is superior. For example, the thickness of the base film may be 5 µm, 6 µm, 8 µm, 11 µm, 12 µm, 14 µm, 16 µm, 18 µm, 19 µm, 20 µm, 23 µm, 25 µm, or the like, that is, any value within the range of 5 µm to 25 µm, without being particularly limited herein.

Further, the porosity of the base film is 40% to 80%.

When the porosity of the base film is excessively low, the ion conductivity will be reduced. When the porosity of the base film is excessively high, the mechanical properties of the separator deteriorates. For this reason, the porosity of the base film is 40% to 80%, for example, may be 40%, 45%, 50%, 55%, 60%, 65%, 70%, 75%, 80%, or the like, that is, any value within the range of 40% to 80%, without being particularly limited herein.

Further, the weight-average molecular weight of the base film is 100,000 to 1,000,000.

Polymers with different weight-average molecular weights serve different functions and uses. The weight-average molecular weight that is excessively high or excessively low does not meet the appropriate weight-average molecular weight range of the base film for use in a lithium-ion battery. The weight-average molecular weight of the base film for use in a lithium-ion battery is 100,000 to 1,000,000, for example, may be 100,000, 500,000, 800,000, 1,000,000, or the like, that is, any value within the range of 100,000-1,000,000, without being particularly limited herein.

Further, a polymer material of the base film includes at least one of polypropylene, polyethylene, polyamide, polyester, polytetrafluoroethylene, polyvinylidene fluoride, or polyvinyl chloride.

The base film may be one selected from polymer films such as polypropylene or polyethylene, and may be a non-woven fabric film that uses polyamide, polyester, polytetrafluoroethylene, polyvinylidene fluoride, polyvinyl chloride, or the like as a substrate.

This application further provides an electrode assembly. The electrode assembly includes a negative electrode plate, a positive electrode plate, and the separator disclosed above. The electrode assembly prepared from the above separator can prevent lithium dendrites from keeping growing and penetrating the separator, thereby improving the safety of the electrode assembly.

Further, it is defined that the first isolation layer is oriented toward the negative electrode plate, and the second isolation layer is oriented toward the positive electrode plate. When the first isolation layer includes a base film and an inorganic coating, the inorganic coating is disposed on one side of the base film, the side being oriented away from the negative electrode plate.

Considering that the inorganic material contains some active materials that react with lithium, in order to prevent the inorganic coating from directly contacting and parasitically reacting with the lithium on the negative electrode side, the inorganic coating is disposed on one side of the base film, the side being oriented toward the coating. In other words, the inorganic coating is located between the base film and the coating. For example, as shown in FIG. 4, a ceramic layer is used as the inorganic coating, an organic microporous film is used as the base film, and the ceramic layer 23 is disposed on one side of the organic microporous film 21, the side being oriented toward the first surface 11 of the coating 10.

Further, the first isolation layer is oriented toward the negative electrode plate, the second isolation layer is oriented toward the positive electrode plate, the second isolation layer includes a base film and an inorganic coating, and the inorganic coating is disposed on one side of the base film, the side being oriented toward the positive electrode plate; and/or the first isolation layer is oriented toward the negative electrode plate, the second isolation layer is oriented toward the positive electrode plate, the second isolation layer includes a base film and an inorganic coating, and the inorganic coating is disposed on one side of the base film, the side being oriented away from the positive electrode plate.

In other words, the inorganic coating is disposed on one side of the base film, the side being away from the coating; and the base film is disposed on one side of the inorganic coating, the side being away from the coating; or, the inorganic coating is disposed on both sides of the base film, so as to further prevent the dendrites from piercing the separator 100, play a protective role, and improve the mechanical strength of the separator 100.

This application further provides a coating slurry. The coating slurry includes a binder, a solvent, and a solid electrolyte material.

In a process of preparing the coating slurry, additives are generally added for stronger adhesion. For example, the coating slurry includes a binder, a solvent, and a solid electrolyte material.

Furthermore, the mass of the solid electrolyte material is 30% to 45% of the mass of the coating slurry; and/or, the coating slurry further includes a dispersant and a thickener, and a mass ratio between the solid electrolyte material, the binder, the dispersant, and the thickener is 1: (0.15 to 0.45): (0.01 to 0.03): (0.15 to 0.35); and/or, the mass of the solvent is 30% to 60% of the mass of the coating slurry.

When the mass percent of the solid electrolyte material is excessively low, the slurry is relatively thin and the processing cost increases. Conversely, when the mass percent of the solid electrolyte material is excessively high, the solid content is relatively high and makes it difficult to process the material. For this reason, the mass of the solid electrolyte material is 30% to 45%, for example, 30%, 33%, 35%, 38%, 40%, 42%, 43%, 44%, 45%, and so on, of the mass of the coating slurry, that is, any value within the range of 30% to 45%, without being particularly limited herein.

Further, a mass of the solid electrolyte material is 32% to 40% of a mass of the coating slurry.

When the mass of the solid electrolyte material is 32% to 40% of the mass of the coating slurry, the performance of the slurry is superior. For this reason, the proportion of the mass of the solid electrolyte material in relation to the mass of the coating slurry may be 32%, 34%, 36%, 37%, 39%, 40%, or the like, that is, any value within the range of 32% to 40%, without being particularly limited herein.

The mass ratio between the solid electrolyte material, the binder, the dispersant, and the thickener is 1: (0.15 to 0.45): (0.01 to 0.03): (0.15 to 0.35).

Further, the mass ratio of the solid electrolyte material to the binder is 1: (0.15 to 0.45).

A moderate amount of binder prevents the coating layer from falling off and makes the coating layer well resistant to heat. A deficient amount of binder leads to insufficient adhesion, and an excessive amount of binder leads to an excessive slurry viscosity. For this reason, the mass ratio of the solid electrolyte material to the binder is 1: (0.15 to 0.45), for example, may be 1: 0.15, 1: 0.2, 1: 0.25, 1: 0.3, 1: 0.35, 1: 0.4, 1: 0.45, or the like, that is, any value within the range of 1: (0.15 to 0.45), without being particularly limited herein.

Further, the mass ratio of the solid electrolyte material to the binder is 1: (0.18 to 0.36).

When the mass ratio of the solid electrolyte material to the binder is 1: (0.18 to 0.36), the performance of the slurry is superior. For this reason, the mass ratio of the solid electrolyte material to the binder may be 1: 0.18, 1: 0.22, 1: 0.24, 1: 0.26, 1: 0.28, 1: 0.32, 1: 0.34, 1: 0.36, or the like, that is, any value within the range of 1: (0.18 to 0.36), without being particularly limited herein.

Further, the mass ratio of the solid electrolyte material to the dispersant is 1: (0.01 to 0.03).

An appropriate content of the dispersant makes the slurry dispersed evenly, and an excessively low content of the dispersant causes the slurry to agglomerate and be hardly dispersible. For this reason, the mass ratio of the solid electrolyte material to the dispersant is 1: (0.01 to 0.03), for example, may be 1: 0.01, 1: 0.015, 1: 0.02, 1: 0.025, 1: 0.03, or the like, that is, any value within the range of 1: (0.01 to 0.03), without being particularly limited herein.

Further, the mass ratio of the solid electrolyte material to the dispersant is 1: (0.015 to 0.025).

When the mass ratio of the solid electrolyte material to the dispersant is 1: (0.015 to 0.025), the performance of the slurry is superior. For this reason, the mass ratio of the solid electrolyte material to the dispersant may be 1: 0.015, 1: 0.018, 1: 0.021, 1: 0.022, 1: 0.024, 1: 0.025, or the like, that is, any value within the range of 1: (0.015 to 0.025), without being particularly limited herein.

Further, the mass ratio of the solid electrolyte material to the thickener is 1: (0.15 to 0.35).

An excessively low content of the thickener reduces the stability of the slurry, and an excessively high content of the thickener leads to a high viscosity and difficulty of processing. For this reason, the mass ratio of the solid electrolyte material to the thickener is 1: (0.15 to 0.35), for example, may be 1: 0.15, 1: 0.19, 1: 0.20, 1: 0.25, 1: 0.29, 1: 0.30, 1: 0.32, 1: 0.35, or the like, that is, any value within the range of 1: (0.15 to 0.35), without being particularly limited herein.

Further, the mass ratio of the solid electrolyte material to the thickener is 1: (0.18 to 0.30).

When the mass ratio of the solid electrolyte material to the thickener is 1: (0.18 to 0.30), the performance of the slurry is superior. For this reason, the mass ratio of the solid electrolyte material to the thickener may be 1: 0.18, 1: 0.20, 1: 0.22, 1: 0.24, 1: 0.26, 1: 0.28, 1: 0.30, or the like, that is, any value within the range of 1: (0.18 to 0.30), without being particularly limited herein.

Further, the mass of the solvent is 30% to 60% of the mass of the coating slurry.

An excessively high content of the solvent makes the slurry thinner and excessively flowable, and inconveniences the operation in a slurry coating process. For example, the slurry is easy to flow on the isolation layer 20 and difficult to retain. An excessively low content of the solvent makes the slurry hardly dispersible evenly and less viscous, thereby inconveniencing the coating operation and deteriorating the effect of the applied coating layer. For this reason, the mass of the solvent is 30% to 60%, for example, 30%, 34%, 39%, 40%, 44%, 49%, 50%, 54%, 56%, 58%, 60%, and so on, of the mass of the coating slurry, that is, any value within the range of 30% to 60%, without being particularly limited herein.

Further, the mass of the solvent is 45% to 55% of the mass of the coating slurry.

When the mass of the solvent is 45% to 55% of the mass of the coating slurry, the performance of the slurry is superior. For this reason, the proportion of the mass of the solvent in relation to the mass of the coating slurry may be 45%, 46%, 48%, 50%, 52%, 53%, 55%, without being particularly limited herein.

Further, the binder includes at least one of sodium carboxymethyl cellulose (CMC), styrene-butadiene rubber (SBR), or polyvinylidene fluoride (PVDF); and/or, the dispersant includes at least one of hydrolyzed polymaleic anhydride, an acrylic acid block polymer, a polyester block polymer, polyethylene glycol-based polyol, or a polyethyleneimine derivative; and/or, the thickener includes at least one of sodium hydroxymethyl cellulose, methyl cellulose, hydroxyethyl cellulose, hydroxypropyl methyl cellulose, polyacrylate salt, polyurethane, or polyether; and/or, the solvent includes one of deionized water, N-N dimethylformamide (DMF), N-N methylpyrrolidone (NMP), N-N dimethylacetamide (DMAC), or tetrahydrofuran (THF).

The binder includes at least one of sodium carboxymethyl cellulose (CMC), styrene-butadiene rubber (SBR), or polyvinylidene fluoride (PVDF), which means that the binder may be one of the above substances or a combination of a plurality of the above substances.

The dispersant includes at least one of hydrolyzed polymaleic anhydride, an acrylic acid block polymer, a polyester block polymer, polyethylene glycol-based polyol, or a polyethyleneimine derivative, which means that the dispersant may be one of the above substances or a combination of a plurality of the above substances.

The thickener includes at least one of sodium hydroxymethyl cellulose, methyl cellulose, hydroxyethyl cellulose, hydroxypropyl methyl cellulose, polyacrylate salt, polyurethane, or polyether, which means that the thickener may be one of the above substances or a combination of a plurality of the above substances.

The solvent includes at least one of deionized water, N-N dimethylformamide (DMF), N-N methylpyrrolidone (NMP), N-N dimethylacetamide (DMAC), or tetrahydrofuran (THF), which means that the solvent may be one of the above substances or a combination of a plurality of the above substances. Understandably, when the solvent is a combination of a plurality of the above substances, the plurality of substances are of relatively high miscibility to each other.

This application provides a preparation method of a coating slurry, including the following steps: mixing a solid electrolyte material, a binder, and a solvent well to obtain a coating slurry.

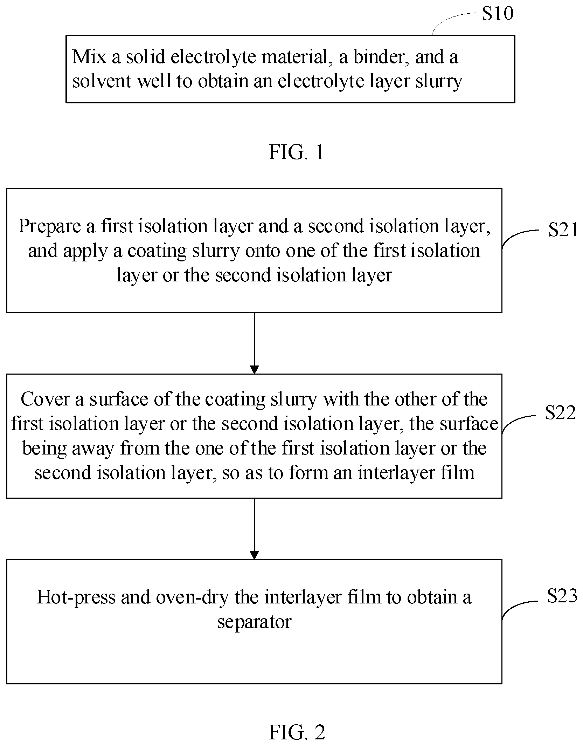

Referring to the schematic diagram shown in FIG. 1, the raw materials are blended together and mixed well to obtain a coating slurry containing the solid electrolyte material.

Further, the step of mixing a solid electrolyte material, a binder, and a solvent well to obtain a coating slurry includes the following step: mixing the solid electrolyte material, the binder, a dispersant, a thickener, and the solvent well to obtain the coating slurry.

In order to achieve high dispersivity of the coating slurry, a dispersant and a thickener are added into a mixture of the solid electrolyte material, the binder, and the solvent, and mixed well.

Further, the step of mixing the solid electrolyte material, the binder, a dispersant, a thickener, and the solvent well to obtain the coating slurry includes the following step: putting the solid electrolyte material into the solvent, and adding the dispersant to perform dispersion, so as to obtain a dispersion solution; adding the thickener into the dispersion solution to perform secondary dispersion, so as to obtain a secondary dispersion solution; and adding the binder into the secondary dispersion solution, and mixing well to obtain the coating slurry.

In order to obtain a slurry of higher homogeneity and higher dispersivity, the raw materials are added stepwise so that the raw materials are well dispersed, thereby making it convenient to uniformly distribute the solid electrolyte material in the coating finally prepared by coating the isolation layer.

Further, in the step of adding a dispersant to perform dispersion, the dispersion is performed by ultrasonication. The ultrasonication continues for a duration of 1 to 3 hours, and/or the ultrasonication is performed at a power of 0.3 W/cm² to 0.6 W/cm², and/or the ultrasonication is performed at a frequency of 25 kHz to 40 kHz.

With the dispersion performed by ultrasonication, the homogeneity of mixed materials is higher. The parameter settings of the ultrasonication device affect the dispersivity. Therefore, controlling the parameters of the ultrasonication device to fall within the following range is conducive to achieving a stronger dispersion effect. The ultrasonication continues for a duration of 1 to 3 hours, for example, 1 h, 2 h, 3 h, or the like, without being particularly limited herein. The ultrasonication is performed at a power of 0.3 W/cm² to 0.6 W/cm², for example, 0.3 W/cm², 0.4 W/cm², 0.5 W/cm², 0.6 W/cm², or the like, without being particularly limited herein. The ultrasonication is performed at a frequency of 25 kHz to 40 kHz, for example, 25 kHz, 30 kHz, 35 kHz, 38 kHz, 40 kHz, or the like, without being particularly limited herein.

Further, the step of adding the thickener into the dispersion solution to perform secondary dispersion so as to obtain a secondary dispersion solution includes the following step: adding the thickener into the dispersion solution, and stirring well to obtain the secondary dispersion solution.

In order to mix the thickener thoroughly with the solvent, the dispersant, and the solid electrolyte material, the mixture is stirred synchronously in the step of adding the thickener into the dispersion solution.

Further, in the stirring step, the stirring is performed at a rotation speed of 1000 rpm to 1600 rpm, and/or the stirring continues for a duration of 30 to 90 minutes.

The stirring is performed at a rotation speed of 1000 rpm to 1600 rpm, for example, 1000 rpm, 1100 rpm, 1200 rpm, 1300 rpm, 1400 rpm, 1500 rpm, 1600 rpm, or the like. The stirring continues for a duration of 30 to 90 minutes, for example, 30 min, 40 min, 50 min, 60 min, 70 min, 80 min, 90 min, or the like, to obtain a well dispersed secondary dispersion solution.

Further, the step of adding the binder into the secondary dispersion solution and mixing well to obtain a coating slurry includes the following step: adding the binder into the secondary dispersion solution, and stirring well to obtain the coating slurry.

To make the binder well mixed in the secondary dispersion solution, the mixture is stirred in the step of adding the binder into the secondary dispersion solution.

Further, the stirring is performed at a rotation speed of 700 rpm to 1200 rpm, and/or the stirring continues for a duration of 30 to 60 minutes.

The stirring is performed at a rotation speed of 700 rpm to 1200 rpm, for example, 700 rpm, 800 rpm, 900rpm, 1000 rpm, 1100 rpm, 1200 rpm, or the like. The stirring continues for a duration of 30 to 60 minutes, for example, 30 min, 40 min, 50 min, 60 min, or the like, to obtain a well dispersed coating slurry.

This application provides a preparation method of a separator, including the following steps: preparing a first isolation layer and a second isolation layer, applying a coating slurry onto one of the first isolation layer or the second isolation layer, and letting the other of the first isolation layer or the second isolation layer overlay a surface of the coating slurry to form an interlayer film, the surface being away from the one of the first isolation layer or the second isolation layer; and hot-pressing and oven-drying the interlayer film to obtain a separator.

Referring to the schematic flowchart of the preparation method of a separator shown in FIG. 2, in order to provide both sides of the coating with an isolation layer, a first isolation layer and a second isolation layer are prepared. The coating slurry is applied onto one of the first isolation layer or the second isolation layer, and the other of the first isolation layer or the second isolation layer overlays a surface of the coating slurry to form an interlayer film, the surface being away from the one of the first isolation layer or the second isolation layer. The interlayer film is hot-pressed and oven-dried to obtain a separator.

Further, the two isolation layers are the first isolation layer and the second isolation layer, and the first isolation layer and/or the second isolation layer includes a base film.

The base film is an organic microporous film. The organic microporous film is light in weight, thereby reducing the weight of the separator 100, and avoiding a decrease of the gravimetric energy density of a battery containing the separator 100.

Further, the first isolation layer and/or the second isolation layer further includes an inorganic coating.

The inorganic coating exhibits hardness to a degree, and can prevent lithium dendrites from penetrating the separator to some extent. The inorganic coating can provide overall mechanical strength of the separator, improve the insulativity of the separator, and improve the wettability of the separator to an electrolyte solution.

Further, in the step of applying a coating slurry onto the isolation layer 10, a coating method used for applying the coating slurry is scrape coating.

In the step of coating the isolation layer with the coating slurry, appropriate conditions are required to prepare a qualified separator. For this purpose, the coating method is scrape coating, thereby improving the coating effect.

Further, the preparation method of the separator further satisfies at least one of conditions (1) to (3): (1) in the step of hot-pressing and oven-drying the interlayer film to obtain a separator, the hot-pressing is performed at a temperature of 120 °C to 150 °C; (2) in the step of hot-pressing and oven-drying the interlayer film to obtain a separator, the hot-pressing is performed with a pressure of 3 MPa to 8 MPa; or (3) in the step of hot-pressing and oven-drying the interlayer film to obtain a separator, the oven-drying is performed under a vacuum condition at a temperature of 90 °C to 120 °C for a duration of 6 to 12 hours.

The hot-pressing process is performed at a temperature of 120 °C to 150 °C, for example, 120 °C, 130 °C, 140 °C, 150 °C, or the like, to achieve a superior hot-pressing effect.

The hot-pressing process is performed with a pressure of 3 MPa to 8 MPa, for example, 3 MPa, 4 MPa, 5 MPa, 6 MPa, 7 MPa, 8 MPa, or the like, to achieve a superior hot-pressing effect.

The oven-drying is performed under a vacuum condition at a temperature of 90 °C to 120 °C, for example, 90 °C, 100 °C, 110 °C, 120 °C, or the like. The oven-drying continues for a duration of 6 to 12 hours, for example, 6 h, 7 h, 8 h, 9 h, 10 h, 11 h, 12 h, or the like, to achieve a superior oven-drying effect.

Furthermore, the surface of the base film is subjected to plasma surface modification or corona treatment to make the polymer on the surface of the base film carry a polar functional group.

In order to increase the adhesion of the base film to the inorganic coating or the surface of the coating 10, the polymer on the surface of the base film is activated by plasma surface modification or corona treatment, so as to convert the non-polar polymer to a polar polymer, and in turn, increase the surface energy. In this way, the polymer on the surface of the base film carries a polar functional group, thereby increasing the surface energy, improving adhesion, and making it more convenient for the electrolyte solution to infiltrate.

This application further provides a battery. The battery includes the electrode assembly disclosed above.

The electrode assembly employs all technical solutions of all the above embodiments, and therefore, at least achieves all the beneficial effects brought by the technical solutions of the above embodiments, the details of which are omitted here.

This application further provides an electrical device. The electrical device includes the battery disclosed above.

The battery employs all technical solutions of all the above embodiments, and therefore, at least achieves all the beneficial effects brought by the technical solutions of the above embodiments, the details of which are omitted here.

All the positive electrode materials commonly used in a lithium-ion battery can be used in this application. The positive active material contained in the positive electrode may be a compound that allows lithium ions to be intercalated and deintercalated reversibly. For example, the compound may be a lithium-containing composite oxide represented by LiₓMO₂ or Li_{y}M₂O₄ (where M is a transition metal, 0 ≤ x ≤ 1, and 0 ≤ y ≤ 2), a spinel-like oxide, a layered metal chalcogenide, an olivine structure, or the like.

For example, the compound may be a lithium cobalt oxide such as LiCoO₂, a lithium manganese oxide such as LiMn₂O₄, a lithium nickel oxide such as LiNiO₂, a lithium titanium oxide such as Li₄/3Ti₅/3O₄, a lithium manganese nickel composite oxide, a lithium manganese nickel cobalt composite oxide, or a material of an olivine-type crystal structure such as LiMPO₄ (M = Fe, Mn, Ni), or the like.

Especially, the compound is preferably a lithium-containing composite oxide of a layered structure or a spinel structure. For example, the compound may be a lithium manganese nickel composite oxide exemplified by LiCoO₂, LiMn₂O₄, LiNiO₂, LiNi_{1/2}Mn_{1/2}O₂, and the like; a lithium manganese nickel cobalt composite oxide exemplified by LiNi_{1/3}Mn_{1/3}Co_{1/3}O₂, LiNi_{0.6}Mn_{0.2}Co_{0.2}O₂, and the like; or a lithium-containing composite oxide exemplified by LiNi_{1-x-y-z}CoₓAl_{y}Mg_{z}O₂ (where, 0 ≤ x ≤ 1, 0 ≤ y ≤ 0.1, 0 ≤ z ≤ 0.1, 0 ≤ 1-x-y-z ≤ 1). In addition, such compounds also include lithium-containing composite oxides formed by replacing some of the constituent elements in the above lithium-containing composite oxides with additive elements such as Ge, Ti, Zr, Mg, Al, Mo, and Sn.

One of such positive active materials may be used alone, or at least two thereof may be used in combination. For example, by using a layered lithium-containing composite oxide and a spinel lithium-containing composite oxide simultaneously, both a high capacity and high safety can be achieved.

An exemplary method for preparing a positive electrode of a nonaqueous electrolyte solution secondary battery is: adding an appropriate amount of a conductive agent such as carbon black or acetylene black, a binder such as polyvinylidene fluoride or polyethylene oxide, and the like, into the above positive active material to form a positive electrode slurry, and then applying the slurry onto a strip-shaped molded material that uses a current collection material such as aluminum foil as a core material. However, the method for preparing the positive electrode is not limited to the above example.

All the negative electrode materials commonly used in a lithium-ion battery can be used in this application. The negative active material contained in the negative electrode may be a compound that allows lithium metal or lithium ions to be intercalated or deintercalated. For example, the negative active material may be a material such as an alloy or oxide of aluminum, silicon, tin, or the like, or a carbon material. The carbon material may be graphite, pyrolytic carbon, coke, glassy carbon, a sintered product of an organic polymer compound, mesophase carbon microbeads, or the like.

An exemplary method for preparing a negative electrode of a nonaqueous electrolyte solution secondary battery is: adding an appropriate amount of a conductive agent such as carbon black or acetylene black, a binder such as polyvinylidene fluoride or polyethylene oxide, and the like, into the above negative active material to form a negative electrode slurry, and then applying the slurry onto a strip-shaped molded material that uses a current collection material such as copper foil as a core material. However, the method for preparing the negative electrode is not limited to the above example.

In the nonaqueous electrolyte solution secondary battery disclosed herein, a nonaqueous solvent (organic solvent) is used as a nonaqueous electrolyte solution. The nonaqueous solvents include carbonate esters, ethers, and the like.

Carbonate esters include cyclic carbonate esters and chain carbonate esters. Cyclic carbonate esters include ethylene carbonate, propylene carbonate, butylene carbonate, gamma-butyrolactone, thioesters (such as ethylene glycol sulfide), and the like. Chain carbonate esters include low-viscosity polar chain carbonate esters exemplified by dimethyl carbonate, diethyl carbonate, and ethyl methyl carbonate; and aliphatic branched carbonate ester compounds. A mixed solvent of a cyclic carbonate ester (especially ethylene carbonate) and a chain carbonate ester is particularly preferred.

The ethers include tetraethylene glycol dimethyl ether (TEGDME), ethylene glycol dimethyl ether (DME), 1,3-dioxolane (DOL), and the like.

In addition to the above nonaqueous solvents, the solvent may be a chain alkyl ester such as methyl propionate, or a chain phosphate triester such as trimethyl phosphate, or a nitrile solvent such as 3-methoxypropionitrile; or a nonaqueous solvent (organic solvent) such as a branched compound containing an ether bond, exemplified by dendrimers.

In addition, the solvent may be a fluorinated solvent.

Examples of the fluorinated solvent include linear (perfluoroalkyl) alkyl ethers such as H(CF₂)₂OCH₃, C₄F₉OCH₃, H(CF₂)₂OCH₂CH₃, H(CF₂)₂OCH₂CF₃, and H(CF₂)₂CH₂O(CF₂)₂H, CF₃CHFCF₂OCH₃, and CF₃CHFCF₂OCH₂CH₃, that is, 2-trifluoromethyl hexafluoropropylmethyl ether, 2-trifluoromethyl hexafluoropropyl ethyl ether, 2-trifluoromethyl hexafluoropropyl propyl ether, 3-trifluoromethyl octafluorobutyl methyl ether, 3-trifluoromethyl octafluorobutyl ethyl ether, 3-trifluoromethyl octafluorobutyl propyl ether, 4-trifluoromethyl decafluoropentyl methyl ether, 4-trifluoromethyl decafluoropentyl ethyl ether, 4-trifluoromethyl decafluoropentyl propyl ether, 5-trifluoromethyl dodecafluorohexyl methyl ether, 5-trifluoromethyl dodecafluorohexyl ethyl ether, 5-trifluoromethyl dodecafluorohexyl propyl ether, 6-trifluoromethyl tetradecafluoroheptyl methyl ether, 6-trifluoromethyl tetradecafluoroheptyl ethyl ether, 6-trifluoromethyl tetradecafluoroheptyl propyl ether, 7-trifluoromethyl hexadecafluorooctyl methyl ether, 7-trifluoromethyl hexadecafluorooctyl ethyl ether, 7-trifluoromethyl hexadecafluorooctyl propyl ether, and the like.

In addition, the iso(perfluoroalkyl)alkyl ether and the linear (perfluoroalkyl)alkyl ether may be used in combination.

The electrolyte salt used in the nonaqueous electrolyte solution is preferably a lithium salt, for example, lithium perchlorate salt, organic lithium borate salt, fluorine-containing compound lithium salt, and lithium imide salt.

Examples of such electrolyte salts include LiClO₄, LiPF₆, LiBF₄, LiAsF₆, LiSbF₆, LiCF₃SO₃, LiCF₃CO₂, LiC₂F₄(SO₃)₂, LiN(C₂F₅SO₂)₂, LiC(CF₃SO₂)₃, LiCnF₂ₙ₊₁SO₃ (n ≥ 2), LiN(RfOSO₂)₂ (where Rf is a fluoroalkyl group), and the like. Among such lithium salts, the fluorine-containing organic lithium salt is particularly preferred. Due to a highly anionic nature and ease of dissociation into ions, the fluorine-containing organic lithium salt is easily soluble in a nonaqueous electrolyte solution.

A concentration of the electrolyte lithium salt in the nonaqueous electrolyte solution is preferably at least 0.3 mol/L, and more preferably at least 0.7 mol/L, preferably at most 1.7 mol/L, and more preferably at most 1.2 mol/L. When the concentration of the electrolyte lithium salt is excessively low, the ion conductivity is excessively low. When the concentration of the electrolyte lithium salt is excessively high, the electrolyte salt that has not been completely dissolved is prone to precipitate.

Furthermore, various additives that can improve the performance of the battery containing the nonaqueous electrolyte solution may be added into the nonaqueous electrolyte solution, without being particularly limited herein.

Especially, this application is also applicable to lithium metal batteries, and the separator disclosed herein may be used to replace a conventional separator. The negative electrode of the battery may be lithium metal or lithium alloy, or the battery is an anode-free battery. The corresponding positive electrode material has been described above. If the battery is an anode-free lithium metal battery, the positive electrode material needs to provide a lithium source.

The electrode plate employs all technical solutions of all the above embodiments, and therefore, at least achieves all the beneficial effects brought by the technical solutions of the above embodiments, the details of which are omitted here.

### Embodiments

### Embodiment 1

### Preparing a separator

1) Cleaning a 7 µm-thick polyethylene porous film (organic microporous film) by use of ethanol or acetone, drying the cleaned film at a temperature of 60 °C to 70 °C, laying the film flat, and then performing plasma treatment on the film for 4 minutes for future use.
2) Preparing a coating slurry. Constituents of the coating slurry include LATP, a binder polyvinylidene fluoride (PVDF), a dispersant hydrolyzed polymaleic anhydride, a thickener sodium hydroxymethyl cellulose (CMC), and deionized water. The mass ratio between the constituents is: LATP: PVDF: hydrolyzed polymaleic anhydride: sodium hydroxymethyl cellulose: solvent = 0.35: 0.07: 0.0056: 0.0875: 0.4869.
3) Mixing 35 wt% lithium aluminum titanium phosphate inorganic particles, 0.56 wt% hydrolyzed polymaleic anhydride dispersant, and 48.69 wt% deionized water, where the aggregate mass percent of the coating slurry is 100 wt%; and ultrasonically dispersing the mixture in an ultrasonic cleaner for 2 hours.
4) Adding, upon completion of the dispersion, a thickener CMC slowly to perform secondary dispersion. Dispersing the dispersion solution at a rotation speed of 1000 rpm for 30 minutes. Adding, upon completion of stirring, a binder PVDF to perform secondary mixing. Stirring the mixture at a rotation speed of 800 rpm for 30 minutes to form a coating slurry. Applying the coating slurry onto one side of a 7 µm-thick polyethylene porous film of a 60% porosity by means of gravure transfer coating until the coating thickness reaches 3 µm, and then compounding the coated polyethylene porous film with a non-coated side of an Al₂O₃ ceramic composite separator (CCS, purchased from Shanghai SEMCORP), and baking the compounded separator at 60 °C for 5 minutes to obtain a finished separator.

### Embodiment 2

Except that in step 2), the mass ratio of LATP: PVDF: hydrolyzed polymaleic anhydride: sodium hydroxymethyl cellulose: solvent is changed to 0.32: 0.064: 0.0052: 0.08: 0.5308, the rest is identical to Embodiment 1.

### Embodiment 3

Except that in step 2), the mass ratio of LATP: PVDF: hydrolyzed polymaleic anhydride: sodium hydroxymethyl cellulose: solvent is changed to 0.4: 0.08: 0.0064: 0.1: 0.4136, the rest is identical to Embodiment 1.

### Embodiment 4

Except that in step 2), the mass ratio of LATP: PVDF: hydrolyzed polymaleic anhydride: sodium hydroxymethyl cellulose: solvent is changed to 0.3: 0.06: 0.0048: 0.075: 0.5602, the rest is identical to Embodiment 1.

### Embodiment 5

Except that in step 2), the mass ratio of LATP: PVDF: hydrolyzed polymaleic anhydride: sodium hydroxymethyl cellulose: solvent is changed to 0.45: 0.09: 0.0072: 0.1125: 0.3403, the rest is identical to Embodiment 1.

### Embodiment 6

Except that the solid electrolyte powder used in step 2) is changed to lithium titanium phosphate (LTP), the rest is identical to Embodiment 1.

### Embodiment 7

Except that the solid electrolyte powder used in step 2) is changed to lithium tetrathiophosphate (Li₃PS₄), the rest is identical to Embodiment 1.

### Embodiment 8

Except that the solid electrolyte powder used in step 2) is changed to lithium germanium phosphorus sulfide (Li₁₀GeP₂S₁₂, LGPS), the rest is identical to Embodiment 1.

### Embodiment 9

Except that the Al₂O₃ ceramic composite separator used in step 4) is changed to a boehmite ceramic composite separator, the rest is identical to Embodiment 1.

### Embodiment 10

Except that the Al₂O₃ ceramic composite separator used in step 4) is changed to a SiO₂ ceramic composite separator, the rest is identical to Embodiment 1.

### Embodiment 11

Except that the solid electrolyte powder used in step 2) is changed to Li₆PS₅Cl, the rest is identical to Embodiment 1.

### Embodiments 12 to 14

Except that the dimensions of the solid electrolyte powder used in step 2) are changed to 50 nm, 500 nm, and 5 µm respectively, the rest is identical to Embodiment 1.

### Embodiments 15 to 16

Except that the thickness of the solid electrolyte coating used in step 2) is changed to 0.5 µm and 5 µm respectively, the rest is identical to Embodiment 1.

### Embodiments 17 to 20

Except that the thickness of the ceramic composite separator used in step 4) is changed to 1 µm, 1.5 µm, 3.5 µm, and 5 µm respectively, the rest is identical to Embodiment 1.

### Embodiments 21 to 24

Except that the particle diameter Dᵥ₅₀ of the inorganic material in the ceramic composite separator used in step 4) is changed to 0.01 µm, 0.05 µm, 0.5 µm, and 10 µm respectively, the rest is identical to Embodiment 1.

### Comparative Embodiment 1

Except that in step 2), the mass ratio of LATP: PVDF: hydrolyzed polymaleic anhydride: sodium hydroxymethyl cellulose: solvent is changed to 0.2: 0.04: 0.0032: 0.05: 0.7068, the rest is identical to Embodiment 1.

### Comparative Embodiment 2

Except that in step 2), the mass ratio of LATP: PVDF: hydrolyzed polymaleic anhydride: sodium hydroxymethyl cellulose: solvent is changed to 0.5: 0.1: 0.008: 0.125: 0.267, the rest is identical to Embodiment 1.

### Comparative Embodiment 3

Except that the solid electrolyte powder used in step 2) is changed to Al₂O₃, the rest is identical to Embodiment 1.

### Comparative Embodiments 4 to 5

Except that the dimensions of the solid electrolyte powder used in step 2) are changed to 40 nm and 6000 nm respectively, the rest is identical to Embodiment 1.

### Comparative Embodiments 6 to 7

Except that the thickness of the solid electrolyte coating used in step 2) is changed to 0.4 µm and 6 µm respectively, the rest is identical to Embodiment 1.

### Comparative Embodiments 8 to 9

Except that the thickness of the ceramic composite separator used in step 4) is changed to 0.5 µm and 6 µm respectively, the rest is identical to Embodiment 1.

**Table 1 List of parameters in embodiments (To be continued)**

| Parameter | Parameter | Embodiment 1 | Embodiment 2 | Embodiment 3 | Embodiment 4 |
|---|---|---|---|---|---|
| Solid electrolyte | Material | Lithium aluminum titanium phosphate | Lithium aluminum titanium phosphate | Lithium aluminum titanium phosphate | Lithium aluminum titanium phosphate |
| | Content (%) | 35 | 32 | 40 | 30 |
| | Dimension | 600 nm | 600 nm | 600 nm | 600 nm |
| Binder | Material | PVDF | PVDF | PVDF | PVDF |
| | Content (%) | 7 | 6.4 | 8 | 6 |
| Dispersant | Material | Hydrolyzed polymaleic anhydride | Hydrolyzed polymaleic anhydride | Hydrolyzed polymaleic anhydride | Hydrolyzed polymaleic anhydride |
| | Content (%) | 0.56 | 0.52 | 0.64 | 0.48 |
| Thickener | Material | Sodium hydroxycellulose | Sodium hydroxycellulose | Sodium hydroxycellulose | Sodium hydroxycellulose |
| | Content (%) | 8.75 | 8 | 10 | 7.5 |
| Solvent | Material | Deionized water | Deionized water | Deionized water | Deionized water |
| | Content (%) | 48.69 | 53.08 | 41.36 | 56.02 |
| Ceramic composite separator | Material | Al₂O₃ | Al₂O₃ | Al₂O₃ | Al₂O₃ |
| | Thickness | 2 µm | 2 µm | 2 µm | 2 µm |
| | Particle size | 100 nm | 100 nm | 100 nm | 100 nm |
| Solid electrolyte coating | Thickness | 3 µm | 3 µm | 3 µm | 3 µm |

**Table 1 List of parameters in embodiments (Continued)**

| Parameter | Parameter | Embodiment 5 | Embodiment 6 | Embodiment 7 |
|---|---|---|---|---|
| Solid electrolyte | Material | Lithium aluminum titanium phosphate | Lithium titanium phosphate | Lithium tetrathiophosphate |
| | Content (%) | 45 | 35 | 35 |
| | Dimension | 600 nm | 600 nm | 600 nm |
| Binder | Material | PVDF | PVDF | PVDF |
| | Content (%) | 9 | 7 | 7 |
| Dispersant | Material | Hydrolyzed polymaleic anhydride | Hydrolyzed polymaleic anhydride | Hydrolyzed polymaleic anhydride |
| | Content (%) | 0.72 | 0.56 | 0.56 |
| Thickener | Material | Sodium hydroxycellulose | Sodium hydroxycellulose | Sodium hydroxycellulose |
| | Content (%) | 11.25 | 8.75 | 8.75 |
| Solvent | Material | Deionized water | Deionized water | Deionized water |
| | Content (%) | 34.03 | 48.69 | 48.69 |
| Ceramic composite separator | Material | Al₂O₃ | Al₂O₃ | Al₂O₃ |
| | Thickness | 2 µm | 2 µm | 2 µm |
| | Particle size | 100 nm | 100 nm | 100 nm |
| Solid electrolyte coating | Thickness | 3 µm | 3 µm | 3 µm |

**Table 2 List of parameters in embodiments (To be continued)**

| Parameter | Parameter | Embodiment 8 | Embodiment 9 | Embodiment 10 | Embodiment 11 |
|---|---|---|---|---|---|
| Solid electrolyte | Material | Lithium germanium phosphorus sulfide | Lithium aluminum titanium phosphate | Lithium aluminum titanium phosphate | Li₆PS₅Cl |
| | Content (%) | 35 | 35 | 35 | 35 |
| | Dimension | 600 nm | 600 nm | 600 nm | 600 nm |
| Binder | Material | PVDF | PVDF | PVDF | PVDF |
| | Content (%) | 7 | 7 | 7 | 7 |
| Dispersant | Material | Hydrolyzed polymaleic anhydride | Hydrolyzed polymaleic anhydride | Hydrolyzed polymaleic anhydride | Hydrolyzed polymaleic anhydride |
| | Content (%) | 0.56 | 0.56 | 0.56 | 0.56 |
| Thickener | Material | Sodium hydroxycellulose | Sodium hydroxycellulose | Sodium hydroxycellulose | Sodium hydroxycellulose |
| | Content (%) | 8.75 | 8.75 | 8.75 | 8.75 |
| Solvent | Material | Deionized water | Deionized water | Deionized water | Deionized water |
| | Content (%) | 48.69 | 48.69 | 48.69 | 48.69 |
| Ceramic composite separator | Material | Al₂O₃ | Boehmite | SiO₂ | Al₂O₃ |
| | Thickness | 2 µm | 2 µm | 2 µm | 2 µm |
| | Particle size | 100 nm | 100 nm | 100 nm | 100 nm |
| Solid electrolyte coating | Thickness | 3 µm | 3 µm | 3 µm | 3 µm |

**Table 2 List of parameters in embodiments (Continued)**

| Parameter | Parameter | Embodiment 12 | Embodiment 13 | Embodiment 14 |
|---|---|---|---|---|
| Solid electrolyte | Material | Lithium aluminum titanium phosphate | Lithium aluminum titanium phosphate | Lithium aluminum titanium phosphate |
| | Content (%) | 35 | 35 | 35 |
| | Dimension | 50 nm | 500 nm | 5 µm |
| Binder | Material | PVDF | PVDF | PVDF |
| | Content (%) | 7 | 7 | 7 |
| Dispersant | Material | Hydrolyzed polymaleic anhydride | Hydrolyzed polymaleic anhydride | Hydrolyzed polymaleic anhydride |
| | Content (%) | 0.56 | 0.56 | 0.56 |
| Thickener | Material | Sodium hydroxycellulose | Sodium hydroxycellulose | Sodium hydroxycellulose |
| | Content (%) | 8.75 | 8.75 | 8.75 |
| Solvent | Material | Deionized water | Deionized water | Deionized water |
| | Content (%) | 48.69 | 48.69 | 48.69 |
| Ceramic composite separator | Material | Al₂O₃ | Al₂O₃ | Al₂O₃ |
| | Thickness | 2 µm | 2 µm | 2 µm |
| | Particle size | 100 nm | 100 nm | 100 nm |
| Solid electrolyte coating | Thickness | 3 µm | 3 µm | 3 µm |

**Table 3 List of parameters in embodiments (To be continued)**

| Parameter | Parameter | Embodiment 15 | Embodiment 16 | Embodiment 17 | Embodiment 18 |
|---|---|---|---|---|---|
| Solid electrolyte | Material | Lithium aluminum titanium phosphate | Lithium aluminum titanium phosphate | Lithium aluminum titanium phosphate | Lithium aluminum titanium phosphate |
| | Content (%) | 35 | 35 | 35 | 35 |
| | Dimension | 600 nm | 600 nm | 600 nm | 600 nm |
| Binder | Material | PVDF | PVDF | PVDF | PVDF |
| | Content (%) | 7 | 7 | 7 | 7 |
| Dispersant | Material | Hydrolyzed polymaleic anhydride | Hydrolyzed polymaleic anhydride | Hydrolyzed polymaleic anhydride | Hydrolyzed polymaleic anhydride |
| | Content (%) | 0.56 | 0.56 | 0.56 | 0.56 |
| Thickener | Material | Sodium hydroxycellulose | Sodium hydroxycellulose | Sodium hydroxycellulose | Sodium hydroxycellulose |
| | Content (%) | 8.75 | 8.75 | 8.75 | 8.75 |
| Solvent | Material | Deionized water | Deionized water | Deionized water | Deionized water |
| | Content (%) | 48.69 | 48.69 | 48.69 | 48.69 |
| Ceramic composite separator | Material | Al₂O₃ | Al₂O₃ | Al₂O₃ | Al₂O₃ |
| | Thickness | 2 µm | 2 µm | 1 µm | 1.5 µm |
| | Particle size | 100 nm | 100 nm | 100 nm | 100 nm |
| Solid electrolyte coating | Thickness | 0.5 µm | 5 µm | 3 µm | 3 µm |

**Table 3 List of parameters in embodiments (Continued)**

| Parameter | Parameter | Embodiment 19 | Embodiment 20 | Embodiment 21 |
|---|---|---|---|---|
| Solid electrolyte | Material | Lithium aluminum titanium phosphate | Lithium aluminum titanium phosphate | Lithium aluminum titanium phosphate |
| | Content (%) | 35 | 35 | 35 |
| | Dimension | 600 nm | 600 nm | 600 nm |
| Binder | Material | PVDF | PVDF | PVDF |
| | Content (%) | 7 | 7 | 7 |
| Dispersant | Material | Hydrolyzed polymaleic anhydride | Hydrolyzed polymaleic anhydride | Hydrolyzed polymaleic anhydride |
| | Content (%) | 0.56 | 0.56 | 0.56 |
| Thickener | Material | Sodium hydroxycellulose | Sodium hydroxycellulose | Sodium hydroxycellulose |
| | Content (%) | 8.75 | 8.75 | 8.75 |
| Solvent | Material | Deionized water | Deionized water | Deionized water |
| | Content (%) | 48.69 | 48.69 | 48.69 |
| Ceramic composite separator | Material | Al₂O₃ | Al₂O₃ | Al₂O₃ |
| | Thickness | 3.5 µm | 5 µm | 2 µm |
| | Particle size | 100 nm | 100 nm | 0.01 µm |
| Solid electrolyte coating | Thickness | 3 µm | 3 µm | 3 µm |

**Table 4 List of parameters in embodiments**

| Parameter | Parameter | Embodiment 22 | Embodiment 23 | Embodiment 24 |
|---|---|---|---|---|
| Solid electrolyte | Material | Lithium aluminum titanium phosphate | Lithium aluminum titanium phosphate | Lithium aluminum titanium phosphate |
| | Content (%) | 35 | 35 | 35 |
| | Dimension | 600 nm | 600 nm | 600 nm |
| Binder | Material | PVDF | PVDF | PVDF |
| | Content (%) | 7 | 7 | 7 |
| Dispersant | Material | Hydrolyzed polymaleic anhydride | Hydrolyzed polymaleic anhydride | Hydrolyzed polymaleic anhydride |
| | Content (%) | 0.56 | 0.56 | 0.56 |
| Thickener | Material | Sodium hydroxycellulose | Sodium hydroxycellulose | Sodium hydroxycellulose |
| | Content (%) | 8.75 | 8.75 | 8.75 |
| Solvent | Material | Deionized water | Deionized water | Deionized water |
| | Content (%) | 48.69 | 48.69 | 48.69 |
| Ceramic composite separator | Material | Al₂O₃ | Al₂O₃ | Al₂O₃ |
| | Thickness | 2 µm | 2 µm | 2 µm |
| | Particle size | 0.05 µm | 0.5 µm | 10 µm |
| Solid electrolyte coating | Thickness | 3 µm | 3 µm | 3 µm |

**Table 5 List of parameters in comparative embodiments (To be continued)**

| Parameter | Parameter | Comparative Embodiment 1 | Comparative Embodiment 2 | Comparative Embodiment 3 | Comparative Embodiment 4 |
|---|---|---|---|---|---|
| Solid electrolyte | Material | Lithium aluminum titanium phosphate | Lithium aluminum titanium phosphate | Al₂O₃ | Lithium aluminum titanium phosphate |
| | Content (%) | 20 | 50 | 35 | 35 |
| | Dimension | 600 nm | 600 nm | 600 nm | 40 nm |
| Binder | Material | PVDF | PVDF | PVDF | PVDF |
| | Content (%) | 4 | 10 | 7 | 7 |
| Dispersant | Material | Hydrolyzed polymaleic anhydride | Hydrolyzed polymaleic anhydride | Hydrolyzed polymaleic anhydride | Hydrolyzed polymaleic anhydride |
| | Content (%) | 0.32 | 0.8 | 0.56 | 0.56 |
| Thickener | Material | Sodium hydroxycellulose | Sodium hydroxycellulose | Sodium hydroxycellulose | Sodium hydroxycellulose |
| | Content (%) | 5 | 12.5 | 8.75 | 8.75 |
| Solvent | Material | Deionized water | Deionized water | Deionized water | Deionized water |
| | Content (%) | 70.68 | 26.7 | 48.69 | 48.69 |
| Ceramic composite separator | Material | Al₂O₃ | Al₂O₃ | Al₂O₃ | Al₂O₃ |
| | Thickness | 2 µm | 2 µm | 2 µm | 2 µm |
| | Particle size | 100 nm | 100 nm | 100 nm | 100 nm |
| Solid electrolyte coating | Thickness | 3 µm | 3 µm | 3 µm | 3 µm |

**Table 5 List of parameters in comparative embodiments (Continued)**

| Parameter | Parameter | Comparative Embodiment 5 | Comparative Embodiment 6 | Comparative Embodiment 7 |
|---|---|---|---|---|
| Solid electrolyte | Material | Lithium aluminum titanium phosphate | Lithium aluminum titanium phosphate | Lithium aluminum titanium phosphate |
| | Content (%) | 35 | 35 | 35 |
| | Dimension | 6000 nm | 600 nm | 600 nm |
| Binder | Material | PVDF | PVDF | PVDF |
| | Content (%) | 7 | 7 | 7 |
| Dispersant | Material | Hydrolyzed polymaleic anhydride | Hydrolyzed polymaleic anhydride | Hydrolyzed polymaleic anhydride |
| | Content (%) | 0.56 | 0.56 | 0.56 |
| Thickener | Material | Sodium hydroxycellulose | Sodium hydroxycellulose | Sodium hydroxycellulose |
| | Content (%) | 8.75 | 8.75 | 8.75 |
| Solvent | Material | Deionized water | Deionized water | Deionized water |
| | Content (%) | 48.69 | 48.69 | 48.69 |
| Ceramic composite separator | Material | Al₂O₃ | Al₂O₃ | Al₂O₃ |
| | Thickness | 2 µm | 2 µm | 2 µm |
| | Particle size | 100 nm | 100 nm | 100 nm |
| Solid electrolyte coating | Thickness | 3 µm | 0.4 µm | 6 µm |

**Table 6 List of experimental parameters in comparative embodiments**

| Parameter | Parameter | Comparative Embodiment 8 | Comparative Embodiment 9 |
|---|---|---|---|
| Solid electrolyte | Material | Lithium aluminum titanium phosphate | Lithium aluminum titanium phosphate |
| | Content (%) | 35 | 35 |
| | Dimension | 600 nm | 600 nm |
| Binder | Material | PVDF | PVDF |
| | Content (%) | 7 | 7 |
| Dispersant | Material | Hydrolyzed polymaleic anhydride | Hydrolyzed polymaleic anhydride |
| | Content (%) | 0.56 | 0.56 |
| Thickener | Material | Sodium hydroxycellulose | Sodium hydroxycellulose |
| | Content (%) | 8.75 | 8.75 |
| Solvent | Material | Deionized water | Deionized water |
| | Content (%) | 48.69 | 48.69 |
| Ceramic composite separator | Material | Al₂O₃ | Al₂O₃ |
| | Thickness | 0.5 µm | 6 µm |
| | Particle size | 100 nm | 100 nm |
| Solid electrolyte coating | Thickness | 3 µm | 3 µm |

### Separator performance test

The test results are set out in Table 7 and Table 8.

### 1) Separator puncture strength test

Spreading out a lithium battery separator specimen flat in a jig and clamping the separator tightly in accordance with the national standard GB/T 36363-2018 *Polyolefin Separator for Lithium-ion Battery.* Penetrating the separator at a speed of (100+10) mm/min. Taking out the specimen upon completion of the penetration, and measuring the thickness of the separator at 4 points around the pinhole in accordance with GB/T 6672-2001 to obtain four measured values. Averaging out the measured thickness values, and calculating the puncture strength.

### 2) Separator wettability test

Cutting a separator into specimens of 50 mm × 50 mm in size, dripping 1 ml of standard electrolyte solution onto the specimen (the standard electrolyte solution is formed by dissolving 1 mol/L LiPF₆ in ethylene carbonate EC, ethyl methyl carbonate EMC, and dimethyl carbonate DMC mixed at a mass ratio of 1: 1: 1), and observing the angle between the droplet and the separator by using a contact angle meter.

### 3) Testing the electrolyte solution absorption rate of a separator

Soaking a separator in the electrolyte solution for 60 minutes. Taking out and air-drying the separator every 10 minutes, and then weighing the separator. Calculating the electrolyte solution absorption rate according to the following formula: absorption rate = (mass of the separator that has absorbed the electrolyte solution - initial mass of the separator)/initial mass of the separator. A higher absorption rate of the electrolyte solution indicates higher wettability of the separator.

### 4) Testing the ionic conductivity of the separator

This test is performed with reference to the standard GB/T36363 2018.

### 5) Testing the discharge rate of the separator

The discharge rate of a coin cell is tested. The positive electrode of the coin cell is lithium iron phosphate. The mass ratio between the lithium iron phosphate, conductive carbon black, and a PVDF binder is 8: 1: 1. The negative electrode of the coin cell is a lithium sheet. The electrolyte solution of the coin cell is LiFSI/DME with a concentration of 1 mol/L. The separator of the coin cell is a separator prepared in an embodiment or comparative embodiment of this application. The ceramic layer of the separator faces the positive electrode of the battery directly. One side of the separator is subjected to corona treatment and faces the negative electrode of the battery directly.

Charging conditions: The coin cell is charged at a constant current and a constant voltage (CC-CV mode) at room temperature according to the following procedure: First, charging the coin cell at a constant current of 0.33C until the voltage rises to 3.65 V, and then charging the coin cell at a constant voltage until the current drops to 0.05C so as to fully charge the coin cell.

Discharge conditions: Discharging the coin cell at a constant current rate of 0.33C, 1C, and 2C separately until the voltage reaches 2.5 V. Repeating the above operations for 100 cycles.

Calculating and recording the Coulombic efficiency at the end of the 100^{th} cycle of the coin cell discharged at the above different rates separately. Coulombic efficiency = (discharge capacity/charge capacity × 100%).

**Table 7 List of performance parameters**

| Test item | Thickness (µm) | Puncture strength (N·µm⁻¹) | Wetting angle (°) | Electrolyte solution absorption rate (%) | Ionic conductivity at 25 °C (mS·cm⁻¹) |
|---|---|---|---|---|---|
| Embodiment 1 | 19.2 | 10.32 | 15 | 215 | 1.89 |
| Embodiment 2 | 19.4 | 10.16 | 16 | 211 | 1.74 |
| Embodiment 3 | 19.1 | 10.36 | 16 | 212 | 1.68 |
| Embodiment 4 | 19.0 | 9.57 | 17 | 208 | 1.72 |
| Embodiment 5 | 19.2 | 9.91 | 17 | 204 | 1.76 |
| Embodiment 6 | 19.1 | 10.24 | 17 | 207 | 1.80 |
| Embodiment 7 | 19.5 | 10.11 | 16 | 210 | 1.68 |
| Embodiment 8 | 19.1 | 10.03 | 18 | 208 | 1.77 |
| Embodiment 9 | 18.9 | 9.98 | 18 | 206 | 1.63 |
| Embodiment 10 | 19.2 | 10.20 | 17 | 199 | 1.66 |
| Embodiment 11 | 19.3 | 10.17 | 17 | 209 | 1.78 |
| Embodiment 12 | 18.8 | 10.06 | 17 | 206 | 1.66 |
| Embodiment 13 | 18.9 | 10.02 | 17 | 205 | 1.68 |
| Embodiment 14 | 19.1 | 10.03 | 18 | 203 | 1.69 |
| Embodiment 15 | 16.4 | 9.87 | 17 | 203 | 1.72 |
| Embodiment 16 | 21.1 | 10.56 | 18 | 199 | 1.62 |
| Embodiment 17 | 18.0 | 9.95 | 17 | 201 | 1.76 |
| Embodiment 18 | 18.6 | 10.04 | 16 | 200 | 1.72 |
| Embodiment 19 | 20.7 | 10.51 | 17 | 196 | 1.69 |
| Embodiment 20 | 22.1 | 11.02 | 17 | 197 | 1.62 |
| Embodiment 21 | 19.0 | 10.20 | 17 | 199 | 1.67 |
| Embodiment 22 | 18.9 | 10.02 | 17 | 201 | 1.66 |
| Embodiment 23 | 19.1 | 10.07 | 18 | 202 | 1.69 |
| Embodiment 24 | 19.0 | 10.05 | 18 | 204 | 1.72 |
| Comparative Embodiment 1 | 18.5 | 9.12 | 18 | 179 | 1.24 |
| Comparative Embodiment 2 | 18.9 | 9.24 | 19 | 186 | 1.18 |
| Comparative Embodiment 3 | 18.9 | 9.55 | 17 | 188 | 1.02 |
| Comparative Embodiment 4 | 18.9 | 9.25 | 17 | 182 | 1.06 |
| Comparative Embodiment 5 | 18.9 | 9.45 | 18 | 184 | 1.05 |
| Comparative Embodiment 6 | 18.9 | 9.55 | 17 | 188 | 1.02 |
| Comparative Embodiment 7 | 16.3 | 9.26 | 17 | 184 | 1.07 |
| Comparative Embodiment 8 | 22.1 | 9.51 | 18 | 188 | 1.04 |
| Comparative Embodiment 9 | 23.2 | 9.44 | 18 | 187 | 1.01 |

**Table 8 Discharge rate performance**

| Coulombic efficiency (%) | Rate performance | | |
|---|---|---|---|
| | 0.33 C | 1 C | 2 C |
| Embodiment 1 | 99.92 | 98.72 | 93.72 |
| Embodiment 2 | 99.75 | 98.25 | 92.69 |
| Embodiment 3 | 99.89 | 98.18 | 93.15 |
| Embodiment 4 | 99.76 | 98.43 | 92.47 |
| Embodiment 5 | 99.64 | 97.94 | 93.11 |
| Embodiment 6 | 99.90 | 98.33 | 93.23 |
| Embodiment 7 | 99.89 | 97.89 | 92.90 |
| Embodiment 8 | 99.88 | 97.85 | 92.78 |
| Embodiment 9 | 99.79 | 97.60 | 93.10 |
| Embodiment 10 | 99.72 | 97.75 | 92.66 |
| Embodiment 11 | 99.73 | 98.42 | 92.57 |
| Embodiment 12 | 99.71 | 98.53 | 92.62 |
| Embodiment 13 | 99.59 | 98.26 | 92.47 |
| Embodiment 14 | 99.76 | 98.48 | 92.39 |
| Embodiment 15 | 99.78 | 98.72 | 93.02 |
| Embodiment 16 | 99.70 | 98.44 | 92.40 |
| Embodiment 17 | 99.71 | 98.23 | 92.07 |
| Embodiment 18 | 99.65 | 98.02 | 91.87 |
| Embodiment 19 | 99.55 | 97.90 | 91.59 |
| Embodiment 20 | 99.41 | 97.43 | 91.47 |
| Embodiment 21 | 99.66 | 98.11 | 92.15 |
| Embodiment 22 | 99.48 | 98.02 | 92.09 |
| Embodiment 23 | 99.34 | 97.73 | 91.62 |
| Embodiment 24 | 99.15 | 97.48 | 91.45 |
| Comparative Embodiment 1 | 99.35 | 93.15 | 88.45 |
| Comparative Embodiment 2 | 99.41 | 93.21 | 86.78 |
| Comparative Embodiment 3 | 99.04 | 90.78 | 84.18 |
| Comparative Embodiment 4 | 99.02 | 93.34 | 84.28 |
| Comparative Embodiment 5 | 99.06 | 93.67 | 84.17 |
| Comparative Embodiment 6 | 99.07 | 92.78 | 83.41 |
| Comparative Embodiment 7 | 99.08 | 93.43 | 85.56 |
| Comparative Embodiment 8 | 99.04 | 93.25 | 85.45 |
| Comparative Embodiment 9 | 99.02 | 92.80 | 83.15 |

### Data analysis

As shown in Table 7, the thickness of the composite separator provided in Embodiments 1 to 10 of this application is 18 µm to 23 µm, the puncture strength is not less than 9.57 N·µm⁻¹, the wetting angle is not higher than 18°, the electrolyte solution absorption rate is not less than 196%, and the ionic conductivity is not less than 1.62 mS/cm, indicating that the composite separator provided in this application is superior in mechanical strength, wettability by the electrolyte solution, and ion conduction performance.

As shown in Table 8, the Coulombic efficiency of the separators in all the above embodiments is superior to that in the comparative embodiments, indicating that the dendrite resistance and capacity retention ability of the separator in the embodiments are higher than those of the separator in the comparative embodiments regardless of whether the battery is cycled at a low current rate or a high current rate.

Described above are merely some exemplary embodiments of this application without hereby limiting the patent scope of this application. Any and all equivalent structural variations made by using the content of the specification and the drawings of this application, and direct or indirect use of the technical solutions hereof in other related technical fields without departing from the conception of this application, still fall within the patent protection scope of this application.

## Claims

1. A separator, **characterized in that** the separator comprises:
a first isolation layer and a coating disposed on at least one surface of the first isolation layer, wherein the coating comprises a solid electrolyte material; and
a second isolation layer, wherein the second isolation layer is disposed on a surface of the coating, the surface being away from the first isolation layer.

2. The separator according to claim 1, **characterized in that** the first isolation layer and/or the second isolation layer comprises a base film.

3. The separator according to claim 1 or 2, **characterized in that** the first isolation layer and/or the second isolation layer further comprises an inorganic coating.

4. The separator according to claim 3, **characterized in that** the first isolation layer comprises a base film and an inorganic coating, and the inorganic coating is disposed on at least one surface of the base film; and/or
the second isolation layer comprises a base film and an inorganic coating, and the inorganic coating is disposed on at least one surface of the base film.

5. The separator according to any one of claims 1 to 4, **characterized in that** the coating exhibits lithium-ion conductivity, and optionally, at 25 °C, an ion conductivity of the coating ranges from 0.5 S/cm to 5 S/cm.

6. The separator according to any one of claims 1 to 5, **characterized in that** the solid electrolyte material comprises at least one of lithium aluminum titanium phosphate, lithium titanium phosphate, lithium tetrathiophosphate, lithium germanium phosphorus sulfide, or lithium phosphorus sulfur chloride.

7. The separator according to any one of claims 1 or 6, **characterized in that** a particle diameter Dᵥ₅₀ of the solid electrolyte material is 50 nm to 5 µm.

8. The separator according to claim 7, **characterized in that** the particle diameter Dᵥ₅₀ of the solid electrolyte material is 50 nm to 500 nm.

9. The separator according to any one of claims 1 to 8, **characterized in that** a thickness of the coating is 0.5 µm to 5 µm.

10. The separator according to any one of claims 3 to 9, **characterized in that** a thickness of the inorganic coating is 1 µm to 5 µm.

11. The separator according to claim 10, **characterized in that** the thickness of the inorganic coating is 1.5 µm to 3.5 µm.

12. The separator according to any one of claims 3 to 11, **characterized in that** a particle diameter Dᵥ₅₀ of an inorganic material contained in the inorganic coating is 0.01 µm to 10 µm.

13. The separator according to claim 12, **characterized in that** the particle diameter Dᵥ₅₀ of the inorganic material contained in the inorganic coating is 0.05 µm to 0.5 µm.

14. The separator according to any one of claims 3 to 13, **characterized in that** an inorganic material contained in the inorganic coating comprises at least one of Al oxide, Al nitride, Si oxide, Si nitride, Fe oxide, Fe nitride, Fe oxyacid salt, Sn oxide, Ti oxide, Ti nitride, Cu oxide, Cu nitride, Mn oxide, Ge oxide, Zr oxide, Zn oxide, or Ni oxide.

15. The separator according to any one of claims 3 to 14, **characterized in that** an inorganic material contained in the inorganic coating comprises at least one of Al₂O₃, SiO₂, ZnO, Fe₂O₃, NiO, CuO, or TiO₂.

16. The separator according to any one of claims 2 to 15, **characterized in that** a thickness of the base film is 3 µm to 30 µm.

17. The separator according to claim 16, **characterized in that** the thickness of the base film is 5 µm to 25 µm.

18. The separator according to any one of claims 2 to 17, **characterized in that** a porosity of the base film is 40% to 80%.

19. The separator according to any one of claims 2 to 18, **characterized in that** a weight-average molecular weight of the base film is 100,000 to 1,000,000.

20. The separator according to any one of claims 2 to 19, **characterized in that** a polymer material of the base film comprises at least one of polypropylene, polyethylene, polyamide, polyester, polytetrafluoroethylene, polyvinylidene fluoride, or polyvinyl chloride.

21. An electrode assembly, **characterized in that** the electrode assembly comprises a negative electrode plate, a positive electrode plate, and the separator according to any one of claims 1 to 20.

22. The electrode assembly according to claim 21, **characterized in that** it is defined that the first isolation layer is oriented toward the negative electrode plate, the second isolation layer is oriented toward the positive electrode plate, the first isolation layer comprises a base film and an inorganic coating, and the inorganic coating is disposed on one side of the base film, the side being oriented away from the negative electrode plate.

23. The electrode assembly according to claim 21 or 22, **characterized in that** the first isolation layer is oriented toward the negative electrode plate, the second isolation layer is oriented toward the positive electrode plate, the second isolation layer comprises a base film and an inorganic coating, and the inorganic coating is disposed on one side of the base film, the side being oriented toward the positive electrode plate; and/or
the first isolation layer is oriented toward the negative electrode plate, the second isolation layer is oriented toward the positive electrode plate, the second isolation layer comprises a base film and an inorganic coating, and the inorganic coating is disposed on one side of the base film, the side being oriented away from the positive electrode plate.

24. A coating slurry for the coating according to any one of claims 1 to 20, **characterized in that** the coating slurry comprises a binder, a solvent, and a solid electrolyte material.

25. The coating slurry according to claim 24, **characterized in that** a mass of the solid electrolyte material is 30% to 45% of a mass of the coating slurry; and/or
the coating slurry further comprises a dispersant and a thickener, and a mass ratio between the solid electrolyte material, the binder, the dispersant, and the thickener is 1: (0.15 to 0.45): (0.01 to 0.03): (0.15 to 0.35); and/or
a mass of the solvent is 30% to 60% of the mass of the coating slurry.

26. The coating slurry according to claim 25, **characterized in that** the binder comprises at least one of sodium carboxymethyl cellulose (CMC), styrene-butadiene rubber (SBR), or polyvinylidene fluoride (PVDF); and/or
the dispersant comprises at least one of hydrolyzed polymaleic anhydride, an acrylic acid block polymer, a polyester block polymer, polyethylene glycol-based polyol, or a polyethyleneimine derivative; and/or
the thickener comprises at least one of sodium hydroxymethyl cellulose, methyl cellulose, hydroxyethyl cellulose, hydroxypropyl methyl cellulose, polyacrylate salt, polyurethane, or polyether; and/or
the solvent comprises at least one of deionized water, N-N dimethylformamide (DMF), N-N methylpyrrolidone (NMP), N-N dimethylacetamide (DMAC), or tetrahydrofuran (THF).

27. A preparation method of a coating slurry, **characterized in that** the method comprises the following steps:
mixing a solid electrolyte material, a binder, and a solvent well to obtain a coating slurry.

28. The preparation method of a coating slurry according to claim 27, **characterized in that** the step of mixing a solid electrolyte material, a binder, and a solvent well to obtain a coating slurry comprises the following steps:
mixing the solid electrolyte material, the binder, a dispersant, a thickener, and the solvent well to obtain the coating slurry.

29. The preparation method of a coating slurry according to claim 28, **characterized in that** the step of mixing the solid electrolyte material, the binder, a dispersant, a thickener, and the solvent well to obtain the coating slurry comprises the following steps:
putting the solid electrolyte material into the solvent, and adding the dispersant to perform dispersion, so as to obtain a dispersion solution;
adding the thickener into the dispersion solution to perform secondary dispersion, so as to obtain a secondary dispersion solution; and
adding the binder into the secondary dispersion solution, and mixing well to obtain the coating slurry.

30. The preparation method of a coating slurry according to claim 29, **characterized in that** in the step of adding the dispersant to perform dispersion, the dispersion is performed by ultrasonication; and
the ultrasonication continues for a duration of 1 to 3 hours, and/or the ultrasonication is performed at a power of 0.3 W/cm² to 0.6 W/cm², and/or the ultrasonication is performed at a frequency of 25 kHz to 40 kHz.

31. The preparation method of a coating slurry according to claim 29, **characterized in that** the step of adding the thickener into the dispersion solution to perform secondary dispersion so as to obtain a secondary dispersion solution comprises the following step:
adding the thickener into the dispersion solution, and stirring well to obtain the secondary dispersion solution.

32. The preparation method of a coating slurry according to claim 31, **characterized in that**, in the stirring step, the stirring is performed at a rotation speed of 1000 rpm to 1600 rpm, and/or the stirring continues for a duration of 30 to 90 minutes.

33. The preparation method of a coating slurry according to claim 29, **characterized in that** the step of adding the binder into the secondary dispersion solution, and mixing well to obtain a coating slurry, comprise the following step:
adding the binder into the secondary dispersion solution, and stirring well to obtain the coating slurry.

34. The preparation method of a coating slurry according to claim 33, **characterized in that**, in the stirring step, the stirring is performed at a rotation speed of 700 rpm to 1200 rpm, and/or the stirring continues for a duration of 30 to 60 minutes.

35. A preparation method of the separator according to any one of claims 1 to 20, **characterized in that** the method comprises the following steps:
preparing the first isolation layer and the second isolation layer, and applying a coating slurry onto one of the first isolation layer or the second isolation layer;
covering a surface of the coating slurry with the other of the first isolation layer or the second isolation layer, the surface being away from the one of the first isolation layer or the second isolation layer, so as to form an interlayer film; and
hot-pressing and oven-drying the interlayer film to obtain a separator.

36. The preparation method of the separator according to claim 35, **characterized in that** the two isolation layers are the first isolation layer and the second isolation layer, and the first isolation layer and/or the second isolation layer comprises a base film.

37. The preparation method of the separator according to claim 35 or 36, **characterized in that** the first isolation layer and/or the second isolation layer further comprises an inorganic coating.

38. The preparation method of the separator according to any one of claims 35 to 37, **characterized in that**, in the step of applying a coating slurry onto one of the first isolation layer or the second isolation layer, a coating method used for applying the coating slurry is scrape coating.

39. The preparation method of the separator according to any one of claims 35 to 38, **characterized in that** the preparation method of the separator further satisfies at least one of conditions (1) to (3):
(1) in the step of hot-pressing and oven-drying the interlayer film to obtain a separator, the hot-pressing is performed at a temperature of 120 °C to 150 °C;
(2) in the step of hot-pressing and oven-drying the interlayer film to obtain a separator, the hot-pressing is performed with a pressure of 3 MPa to 8 MPa; or
(3) in the step of hot-pressing and oven-drying the interlayer film to obtain a separator, the oven-drying is performed under a vacuum condition at a temperature of 90 °C to 120 °C for a duration of 6 to 12 hours.

40. A battery, **characterized in that** the battery comprises the electrode assembly according to any one of claims 21 to 23.

41. An electrical device, **characterized in that** the electrical device comprises the battery according to claim 51.
